# EUROPEAN PATENT SPECIFICATION

(11) **EP 3 606 177 B1**
(45) Date of publication and mention of the grant of the patent: **15.01.2025**
(21) Application number: 18770674.2
(22) Date of filing: 23.03.2018
(51) Int. Cl.: H04L 5/00, H04W 72/12

(54) **TRANSMISSION METHOD, DEVICE, AND EQUIPMENT FOR PHYSICAL DOWNLINK CONTROL CHANNEL, AND STORAGE MEDIUM**
ÜBERTRAGUNGSVERFAHREN, VORRICHTUNG UND ANLAGE FÜR PHYSIKALISCHEN DOWNLINK-STEUERKANAL UND SPEICHERMEDIUM
PROCÉDÉ, DISPOSITIF ET ÉQUIPEMENT DE TRANSMISSION POUR UN CANAL DE COMMANDE DE LIAISON DESCENDANTE PHYSIQUE, ET SUPPORT DE STOCKAGE

(30) Priority: 24.03.2017 CN 201710184896
(43) Date of publication of application: 05.02.2020
(73) Proprietor: ZTE Corporation, Shenzhen, Guangdong 518057 (CN)
(72) Inventor: YANG, Weiwei, Shenzhen, Guangdong 518057 (CN); DAI, Bo, Shenzhen, Guangdong 518057 (CN); LIU, Kun, Shenzhen, Guangdong 518057 (CN); CHEN, Xianming, Shenzhen, Guangdong 518057 (CN); FANG, Huiying, Shenzhen, Guangdong 518057 (CN)
(74) Representative: Vossius & Partner Patentanwälte Rechtsanwälte mbB
(86) International application number: PCT/CN2018/080354
(87) International publication number: WO 2018/171770

(56) References cited:
- CN-A- 101 404 526
- CN-A- 101 478 808
- CN-A- 101 801 090
- US-A1- 2010 303 011
- US-A1- 2016 128 028
- US-A1- 2017 019 915
- ZTE: "Primary and Secondary PDCCH Design for LTE-A", 3GPP DRAFT; R1-092227 PRIMARY AND SECONDARY PDCCH DESIGN FOR LTE-A, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090507, 7 May 2009 (2009-05-07), XP050339649
- NORTEL NETWORKS: "Control channel design for the support of wider bandwidth for LTE-Advanced", 3GPP DRAFT; R1-091923 (NT EXT BW SIGNALING), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, US; 20090504 - 20090508, 24 June 2009 (2009-06-24), XP050597486

## Description

### TECHNICAL FIELD

The present invention relates to the field of communications and, in particular, relates to methods and apparatuses for detecting and for transmitting a Physical Downlink Control Channel (PDCCH).

### BACKGROUND

In recent years, more and more mobile operators have chosen Long Term Evolution (LTE)/LTE-Advanced (LTE-A) as the evolution direction of the future broadband wireless communication system due to the high spectral efficiency of the LTE/LTE-A. Various Machine Type Communications (MTC) data traffic based on the LTE/LTE-A will also be more attractive. Among several technologies disclosed in the existing art and applicable to the Comb-Internet of Things (C-IOT), the Narrow Band-Internet of Things (NB-IOT) technology is the most attractive. The NB-IOT system focuses on radio frequency access technologies with low complexity and low throughput, and the main research objects include improved indoor coverage, support for massive low-throughput user equipment, low delay sensitivity, ultra-low equipment costs, low equipment power consumption, and network architecturing.

The network may send paging to terminals in an idle state and in a connected state, and the paging process may be triggered by a core network for notifying a certain terminal to receive a paging request, or may be triggered by an evolved Node B (eNB) for notifying update of system information. In a practical application, the paging message may be scheduled by using a PDCCH scrambled by a P-Radio Network Temporary Identifier (RNTI), and transmitted in a Physical Downlink Shared Channel (PDSCH). The terminal detects the corresponding PDCCH at a Paging Occasion (PO), so as to determine whether the PDSCH indicated by the PDCCH carries the paging message. If the corresponding PDCCH is not detected at the PO by the terminal, it is indicated that no paging message exists at this PO. At this time, the terminal goes into a sleep state and does not receive data, and will perform the detection again at the next PO. That is, the terminal needs to perform blind detection on the PDCCH at every PO.

In the MTC/NB-IOT system, the MTC Physical Downlink Control Channel (MPDCCH)/Narrowband Physical Downlink Control Channel (NPDCCH) is carried on the Physical Downlink Shared Channel (PDSCH). Then, each time the terminal performs blind detection on the PDCCH, the terminal needs to receive a complete subframe in order to determine whether a corresponding MPDCCH is detected, and thus, the terminal needs to be in the on state all the time, which wastes power consumption of the terminal.

In the US patent "TWO-STAGE PDCCH WITH DCI FLAGAND DCI FORMAT SIZE INDICATOR" (US 2016/0128028), methods, systems, and devices are described for wireless communication employing two-stage control channel messaging. Systems, methods, and apparatuses for two stage physical downlink control channel (PDCCH) with a downlink control information (DCI) flag and DCI format size indicator are described. For instance, this disclosure presents an example method of wireless communication at a wireless device, which may include receiving, at a first bandwidth and during a transmission time interval (TTI), a first control channel message. In addition, the example method may include determining, based on a flag in the first control channel message, whether a second control channel message is present in the TTI. Furthermore, the example method may include receiving, at a second bandwidth, the second control channel message where the flag indicates that the second control channel message is present for the TTI.

In the US patent "METHOD AND APPARATUS FOR COMPONENT CARRIER AGGREGATION IN WIRELESS COMMUNICATIONS" (US 2010/0303011), a wireless transmit/receive unit (WTRU) receives a downlink subframe having multiple component carriers, each component carrier having control information encoded in a physical data control channel (PDCCH). The WTRU performs a blind decoding of control information in a first PDCCH located within a first component carrier to obtain a location of a second PDCCH located within a second component carrier, where the location of the second PDCCH is relative to a location of the first PDCCH as control channel element offset. The WTRU decodes the second PDCCH at the obtained location.

### SUMMARY

In view of the above matter, embodiments of the present invention intend to provide methods and apparatuses for detecting and for transmitting a PDCCH, so that the terminal obtains Downlink Control Information (DCI) with lower power consumption.

To achieve the preceding object, technical solutions of the embodiments of the present invention are implemented as follows.

In a first aspect, an embodiment of the present invention provides a method for detecting a PDCCH, according to claim 1.

In a second aspect, an embodiment of the present invention provides a method for transmitting a PDCCH according to the independent claim 8.

In a third aspect, an embodiment of the present invention provides an apparatus for detecting a PDCCH according to independent claim 15.

In a fourth aspect, an embodiment of the present invention provides an apparatus for transmitting a PDCCH according to independent claim 16.

Further advantageous embodiments are defined in the dependent claims.

The embodiments of the present invention provide the methods and apparatuses for detecting and transmittting a PDCCH.

The base station sends the first PDCCH carrying the first DCI. The first DCI includes the first indication, and optionally at least one of the transmission information of the second PDCCH, and the transmission mode of the second PDCCH. The base station sends the first PDCCH before sending the second PDCCH, while the terminal determines the second PDCCH according to the first DCI after detecting the first PDCCH. That is, the terminal can determine whether to blindly detect the second PDCCH according to the indication in the first DCI, and reduce, according to the priori information, the number of times the second PDCCH is blindly detected and the number of times the second PDCCH is detected. Thus, the number of times the second PDCCH is detected and the number of times the second PDCCH is blindly detected are reduced, so that the terminal can obtain downlink information with lower power consumption.

### BRIEF DESCRIPTION OF DRAWINGS

FIG. 1 is a schematic flowchart 1 of a method for transmitting a PDCCH according to an embodiment of the present invention;
FIG. 2 is a schematic flowchart 2 of a method for transmitting a PDCCH according to an embodiment of the present invention;
FIG. 3 is a schematic flowchart 3 of a method for transmitting a PDCCH according to an embodiment of the present invention;
FIG. 4 is a schematic diagram 1 of a downlink subframe according to an embodiment of the present invention;
FIG. 5 is a schematic diagram 2 of a downlink subframe according to an embodiment of the present invention;
FIG. 6 is a schematic diagram 3 of a downlink subframe according to an embodiment of the present invention;
FIG. 7 is a schematic diagram 1 of an apparatus for transmitting a PDCCH according to an embodiment of the present invention;
FIG. 8 is a schematic diagram 2 of an apparatus for transmitting a PDCCH according to an embodiment of the present invention.

### DETAILED DESCRIPTION

The technical solutions in the embodiments of the present invention will be described clearly and completely below in conjunction with the drawings in the embodiments of the present invention. In order that the terminal can obtain the downlink control information by using lower power consumption, embodiments of the present invention provide a PDCCH transmission method. The transmission method will be described below in conjunction with the drawings.

First, it is to be noted that the PDCCH mentioned in the embodiments of the present invention is used to carry DCI. The PDCCH has different forms for different communication systems. For example, in NB-IOT systems, the PDCCH may be an NPDCCH; in MTC systems, the PDCCH may be an MPDCCH; and for New Radio (NR) systems, the PDCCH may be an NR-PDCCH. In a practical application, regardless of any system, all PDCCHs used for carrying DCI are within the protection scope of the present invention.

### Embodiment 1

The present embodiment provides a method for transmitting a PDCCH. The method is applied to a communication system, such as an MTC system, an NB-IOT system, etc., and includes at least: a base station and a terminal.

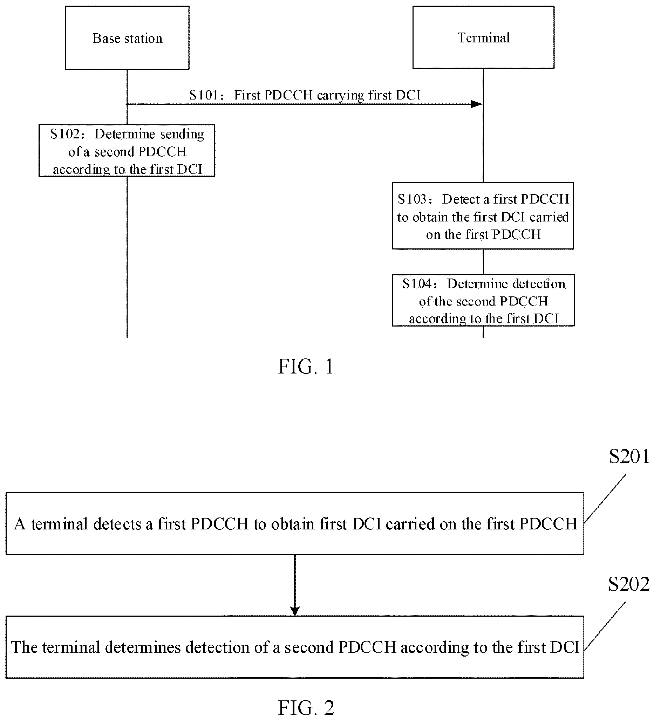

FIG. 1 is a schematic flowchart 1 of a method for transmitting a PDCCH according to the embodiment of the present invention. Referring to FIG. 1, the method includes the steps described below.

In S101, a base station sends a first PDCCH that carries the first DCI.

Here, the first DCI may include one or more of the following information: a first indication for indicating whether to detect the second PDCCH, transmission information of the second PDCCH, and a transmission mode of the second PDCCH.

In the embodiment of the present invention, the first indication may take a first value or a second value; when the first indication takes the first value, the first indication indicates that the terminal detects the second PDCCH; when the first indication takes the second value, the first indication indicates that the terminal does not detect the second PDCCH. Of course, the first value and the second value may be other values, are configured according to practical applications, and are not specifically limited in the embodiment of the present invention.

In the embodiment of the present invention, the transmission information of the second PDCCH may include one or more of the following: the number of repetitions corresponding to the second PDCCH, an indication of a starting position of the search space corresponding to the second PDCCH, the aggregation level corresponding to the second PDCCH, and the candidate set corresponding to the second PDCCH.

In the embodiment of the present invention, the transmission mode of the second PDCCH may be a first mode or a second mode, and at least one of the first transmission parameter corresponding to the first transmission mode or the second transmission parameter corresponding to the second transmission mode is configured through Radio Resource Control (RRC) signaling, or configured through System Information Block (SIB) signaling.

In an embodiment, during transmission of the first PDCCH, one or more of the following information are included: a subframe in which the first PDCCH is sent, and an Orthogonal Frequency Division Multiplexing (OFDM) symbol in which the first PDCCH is sent, the corresponding frequency domain resource when the first PDCCH is sent, and the RNTI corresponding to the first PDCCH.

In the embodiment of the present invention, the first DCI includes the first indication of at least one terminal.

In the embodiment of the present invention, the number of blind detections corresponding to the first PDCCH is less than the number of blind detections corresponding to the second PDCCH. In the implementation process, the first PDCCH may include, but is not limited to, one or more of the cases described below.

In the first case, if the first DCI includes a first indication of one terminal and the first indication indicates detection of the second PDCCH and/or the first DCI includes the transmission information of the second PDCCH, the first PDCCH corresponding to the first DCI may include one or more of the following 1 to 8.
1. L subframes in which the first PDCCH is sent are pre-agreed by the base station and the terminal, and L is a positive integer greater than or equal to 1.
   In a practical application, the L subframes in which the first PDCCH is sent may be starting L subframes of the search space corresponding to the second PDCCH, or may be the first L subframes among the starting subframes of the search space corresponding to the second PDCCH, or the first L subframes in the period T, where the period T is configured in advance by the base station and the terminal, or indicated through higher-layer signaling.
2. The OFDM symbol in which the first PDCCH is sent may be the third OFDM symbol and/or the fourth OFDM symbol in the subframe.
3. When the first PDCCH is sent, the starting position of the corresponding search space is fixed or is pre-agreed by the base station and the terminal.
4. When the first PDCCH is sent, the corresponding aggregation level is fixed or is pre-agreed by the base station and the terminal.
5. When the first PDCCH is transmitted, the corresponding number of repetitions is fixed or is pre-agreed by the base station and the terminal.
6. When the first PDCCH is sent, the corresponding candidate set is fixed or is pre-agreed by the base station and the terminal.
7. The RNTI corresponding to the first PDCCH is the first RNTI.
8. The number of blind detections corresponding to the first PDCCH is less than the number of blind detections corresponding to the second PDCCH.
   In the second case, if the first DCI includes the first indication of one terminal and the first indication is represented by one or more remaining states of a control domain, the first PDCCH corresponding to the first DCI may include one or more of the following 9 to 11.
9. The starting subframe when the first PDCCH is sent is determined by the period and/or the offset configured by a higher layer.
10. An OFDM symbol in which the first PDCCH is sent starts from the m1-th OFDM symbol in the subframe, where the value of m1 is indicated through higher-layer signaling.
11. The RNTI corresponding to the first PDCCH is the second RNTI, and the second RNTI and the first RNTI are different types of RNTIs.
   In the third case, if the first DCI includes the first indication of multiple terminals and the first indication corresponding to each terminal is 1 bit, the first PDCCH corresponding to the first DCI may include one or more of the following 12 to 14.
12. The starting subframe when the first PDCCH is sent is determined by the period and/or the offset configured by the higher layer.
13. The OFDM symbol in which the first PDCCH is sent starts from the m2-th OFDM symbol in the subframe, where the value of m2 is indicated through higher-layer signaling.
14. The RNTI corresponding to the first PDCCH is the third RNTI, and the third RNTI and the first RNTI are different types of RNTIs.
   In the fourth case, if the first DCI includes the transmission information of the second PDCCH, the first PDCCH corresponding to the first DCI may include one or more of the following 15 to 17.
15. An OFDM symbol in which the first PDCCH is sent is the third OFDM symbol and/or the fourth OFDM symbol in the subframe.
16. The number of blind detections corresponding to the first PDCCH is less than the number of blind detections corresponding to the second PDCCH.
17. The RNTI corresponding to the first PDCCH is the first RNTI.
   In the fifth case, if the first DCI includes the first indication of multiple terminals indicating detection of the second PDCCH and the transmission information of the second PDCCH, the first PDCCH corresponding to the first DCI may include the following one or more of 18 to 20.
18. The starting subframe when the first PDCCH is sent is determined by the period and/or the offset configured by the higher-layer.
19. An OFDM symbol in which the first PDCCH is sent starts from the m3-th OFDM symbol in the subframe, where the value of m3 is indicated through higher-layer signaling.
20. The RNTI corresponding to the first PDCCH is the fourth RNTI, and the fourth RNTI and the first RNTI are different types of RNTIs.
   In the sixth case, if the first DCI includes the transmission mode of the second PDCCH, the first PDCCH corresponding to the first DCI may include one or more of the following 21 to 23.
21. An OFDM symbol in which the first PDCCH is sent is the third OFDM symbol and/or the fourth OFDM symbol in the subframe, or is from the m4-th OFDM symbol to the last OFDM symbol in the subframe, where the value of m4 is indicated through higher-layer signaling.
22. The number of blind detections corresponding to the first PDCCH is less than the number of blind detections corresponding to the second PDCCH.
23. The RNTI corresponding to the first PDCCH is the fifth RNTI, and the fifth RNTI and the first RNTI are different types of RNTIs.

In S102, the base station determines the sending of the second PDCCH according to the first DCI. In the implementation process, according to the information included in the first DCI, S102 may be, and is not limited to, the following cases.

In the first case, if the first DCI includes the first indication and the first indication indicates that the terminal detects the second PDCCH, the base station sends the second PDCCH; and if the first indication indicates that the terminal does not detect the second PDCCH, the base station does not send the second PDCCH.

In the second case, if the first DCI includes the transmission information of the second PDCCH, the base station sends the second PDCCH according to the transmission information of the second PDCCH.

In the embodiment of the present invention, the RNTI corresponding to the second PDCCH is the first RNTI.

In the third case, if the first DCI includes the first indication of one or more terminals for indicating detection of the second PDCCH and the transmission information of the second PDCCH, the base station sends the second PDCCH according to the transmission information of the second PDCCH; and if the first DCI includes the first indication of one or more terminals for indicating no detection of the second PDCCH and the transmission information of the second PDCCH, the base station does not send the second PDCCH.

In the fourth case, if the transmission mode of the second PDCCH in the first DCI is a first transmission mode, the terminal sends the second PDCCH according to a first transmission parameter corresponding to the first transmission mode; and if the transmission mode of the second PDCCH in the first DCI is a second transmission mode, the terminal sends the second PDCCH according to a second transmission parameter corresponding to the second transmission mode.

In the embodiment of the present invention, at least one of the first transmission parameter or the second transmission parameter may be configured through RRC signaling, or may be configured through SIB signaling.

Of course, other cases may exist in the S 102, which are not specifically limited in the embodiment of the present invention.

It is to be noted that, in the present embodiment, when the first mode of the higher-layer signaling is enabled, the base station sends the second PDCCH to the terminal after the base station sends the first PDCCH, otherwise, the base station sends the second PDCCH directly; or when the first mode is indicated through the higher-layer signaling, the base station sends the second PDCCH to the terminal after the base station sends the first PDCCH, and when the second mode is indicated through the higher-layer signaling, the base station sends the second PDCCH directly; or at t1 millisecond in a period of t milliseconds, the base station sends the second PDCCH to the terminal after the base station sends the first PDCCH, and at other moments in the period of t milliseconds, the base station sends the second PDCCH directly. Here, the base station directly sending the second PDCCH refers to that the base station does not send the second PDCCH dedicatedly to the terminal.

In S103, the terminal detects the first PDCCH to obtain the first DCI carried on the first PDCCH. In S104, the terminal determines the detection of the second PDCCH according to the first DCI. In the implementation process, according to the information included in the first DCI, S 104 may be, and is not limited to, the cases described below.

In the first case, if the first indication in the first DCI indicates detection of the second PDCCH, that is, when the first indication takes the first value, S104 includes that: the terminal blindly detects the second PDCCH in a preset period or in a search space corresponding to the second PDCCH.

In the second case, if the first DCI includes the transmission information of the second PDCCH, S104 may include that: the terminal blindly detects the second PDCCH according to the transmission information of the second PDCCH.

In the third case, if the first DCI includes the first indication of one or more terminals for indicating detection of the second PDCCH and the transmission information of the second PDCCH, the terminal blindly detects the second PDCCH according to the transmission information of the second PDCCH; and if the first DCI includes the first indication of one or more terminals for indicating no detection of the second PDCCH and the transmission information of the second PDCCH, the terminal does not blindly detect the second PDCCH.

In the fourth case, if the transmission mode of the second PDCCH in the first DCI is the first transmission mode, the terminal blindly detects the second PDCCH according to the first transmission parameter corresponding to the first transmission mode; and if the transmission mode of the second PDCCH is the second transmission mode, the terminal blindly detects the second PDCCH according to the second transmission parameter corresponding to the second transmission mode.

Of course, other cases may exist in the S 104, which are not specifically limited in the embodiment of the present invention.

It is to be noted that, in the present embodiment, when the first mode of the higher-layer signaling is enabled, after the terminal detects the first PDCCH, the terminal determines the detection of the second PDCCH according to the first DCI carried on the first PDCCH, otherwise, the terminal directly detects the second PDCCH; or when the first mode is indicated through the higher-layer signaling, after the terminal detects the first PDCCH, the terminal determines the detection of the second PDCCH according to the first DCI carried on the first PDCCH, and when the second mode is indicated through the higher-layer signaling, the terminal detects the second PDCCH directly; or at t1 millisecond in the period of t milliseconds, after the terminal detects the first PDCCH, the terminal determines the detection of the second PDCCH according to the first DCI carried on the first PDCCH, and at other moments in the period of t milliseconds, the terminal detects the second PDCCH directly.

In the embodiment of the present invention, the terminal determines, according to the indication of the first DCI carried on the first PDCCH, whether to blindly detect the second PDCCH, and determines the manner of blindly detecting the second PDCCH and the number of blind detections, so that the number of detections of the second PDCCH and/or the number of blind detections during each detection can be effectively reduced, and the terminal can obtain the downlink control information with lower power consumption.

### Embodiment 2

Based on the foregoing embodiments, the present embodiment provides a method for transmitting a PDCCH. The method is applied to the terminal in one or more of the above embodiments. FIG. 2 is a schematic flowchart 2 of the method for transmitting a PDCCH according to the embodiment of the present invention. Referring to FIG. 2, the method includes the steps described below.

In S201, a terminal detects the first PDCCH to obtain the first DCI carried on the first PDCCH. The first DCI includes one or more of the following information: the first indication, transmission information of the second PDCCH, and a transmission mode of the second PDCCH.

In S202, the terminal determines detection of the second PDCCH according to the first DCI.

In the embodiment of the present invention, the first indication takes a first value or a second value; when the first indication takes the first value, the first indication indicates that the terminal detects the second PDCCH; and when the first indication takes the second value, the first indication indicates that the terminal does not detect the second PDCCH.

In the embodiment of the present invention, when the first indication takes the first value, S202 may include that: the terminal blindly detects the second PDCCH in a preset period or a search space corresponding to the second PDCCH.

In the embodiment of the present invention, the first DCI includes the first indication of at least one terminal.

In the embodiment of the present invention, when the first DCI includes the first indication of one terminal, the first PDCCH includes one or more of the following: an OFDM symbol in which the first PDCCH is sent is the third OFDM symbol and/or the fourth OFDM symbol in the subframe; the starting position of the search space corresponding to the first PDCCH is fixed or is pre-agreed by the base station and the terminal; the number of blind detections corresponding to the first PDCCH is less than the number of blind detections corresponding to the second PDCCH; and the RNTI corresponding to the first PDCCH is the first RNTI.

In the embodiment of the present invention, when the first DCI includes the first indication of one terminal and the first indication is represented by one or more remaining states of a control domain of the first DCI, the first PDCCH includes one or more of the following: the OFDM symbol in which the first PDCCH is sent starts from the m1-th OFDM symbol to the last OFDM symbol in the subframe, where the value of m1 is indicated through higher-layer signaling; and the RNTI corresponding to the first PDCCH is the second RNTI.

In the embodiment of the present invention, when the first DCI includes the first indication of multiple terminals, the first PDCCH includes one or more of the following: the OFDM symbol in which the first PDCCH is sent starts from the m2-th OFDM symbol to the last OFDM symbol in the subframe, where the value of m2 is indicated through higher-layer signaling; and the RNTI corresponding to the first PDCCH is the third RNTI.

In the embodiment of the present invention, the transmission information of the second PDCCH includes one or more of the following information: the number of repetitions corresponding to the second PDCCH, an indication of a starting subframe of the search space corresponding to the second PDCCH, the aggregation level corresponding to the second PDCCH, and the candidate set corresponding to the second PDCCH.

In the embodiment of the present invention, S202 may include that: when the first DCI includes the transmission information of the second PDCCH, the terminal blindly detects the second PDCCH in a preset period or in a search space corresponding to the second PDCCH according to the transmission information of the second PDCCH.

In the embodiment of the present invention, when the first DCI includes the transmission information of the second PDCCH, the first PDCCH includes one or more of the following: an OFDM symbol in which the first PDCCH is sent is the third OFDM symbol and/or the fourth OFDM symbol in the subframe; the number of blind detections corresponding to the first PDCCH is smaller than the number of blind detections corresponding to the second PDCCH; and the RNTI corresponding to the first PDCCH is the first RNTI.

In the embodiment of the present invention, when the first DCI includes the first information of the multiple terminals and the transmission information of the second PDCCH, the first PDCCH includes one or more of the following: the OFDM symbol in which the first PDCCH is sent starts from the m3-th OFDM symbol to the last OFDM symbol in the subframe, where the value of m3 is indicated through higher-layer signaling; and the RNTI corresponding to the first PDCCH is the fourth RNTI.

In the embodiment of the present invention, the transmission mode of the second PDCCH includes the first transmission mode and the second transmission mode; and the first transmission parameter corresponding to the first transmission mode and/or the second transmission parameter corresponding to the second transmission mode are configured through RRC signaling or SIB signaling.

In the embodiment of the present invention, S202 may include that: when the transmission mode of the second PDCCH is the first transmission mode, the terminal blindly detects the second PDCCH in a preset period or in a search space corresponding to the second PDCCH according to the first transmission parameter corresponding to the first transmission mode; and when the transmission mode of the second PDCCH is the second transmission mode, the terminal blindly detects the second PDCCH in thee preset period or in the search space corresponding to the second PDCCH according to the second transmission parameter corresponding to the second transmission mode.

In the embodiment of the present invention, when the first DCI includes the transmission mode of the second PDCCH, the first PDCCH includes one or more of the following: an OFDM symbol in which the first PDCCH is sent is the third OFDM symbol and/or the fourth OFDM symbol in the subframe, or from the m4-th OFDM symbol to the last OFDM symbol in the subframe, where the value of m4 is indicated through higher-layer signaling; the RNTI corresponding to the first PDCCH is the fifth RNTI; and the number of blind detections corresponding to the first PDCCH is less than the number of blind detections corresponding to the second PDCCH.

The preset period is a period pre-agreed by the base station and the terminal, or a period indicated through the higher-layer signaling.

In the embodiment of the present invention, when the first mode of the higher-layer signaling is enabled, after the terminal detects the first PDCCH, the terminal determines the detection of the second PDCCH according to the first DCI carried on the first PDCCH, otherwise, the terminal detects the second PDCCH directly; or when the first mode is indicated through higher-layer signaling, after the terminal detects the first PDCCH, the terminal determines the detection of the second PDCCH according to the first DCI carried on the first PDCCH, and when the second mode is indicated through the higher-layer signaling, the terminal detects the second PDCCH directly; or at t1 millisecond in the period of t milliseconds, after the terminal detects the first PDCCH, the terminal determines the detection of the second PDCCH according to the first DCI carried on the first PDCCH, and at other moments in the period of t milliseconds, the terminal detects the second PDCCH directly.

### Embodiment 3

Based on the foregoing embodiments, the present embodiment provides a method for transmitting a PDCCH. The method is applied to the base station described in one or more the above embodiments.

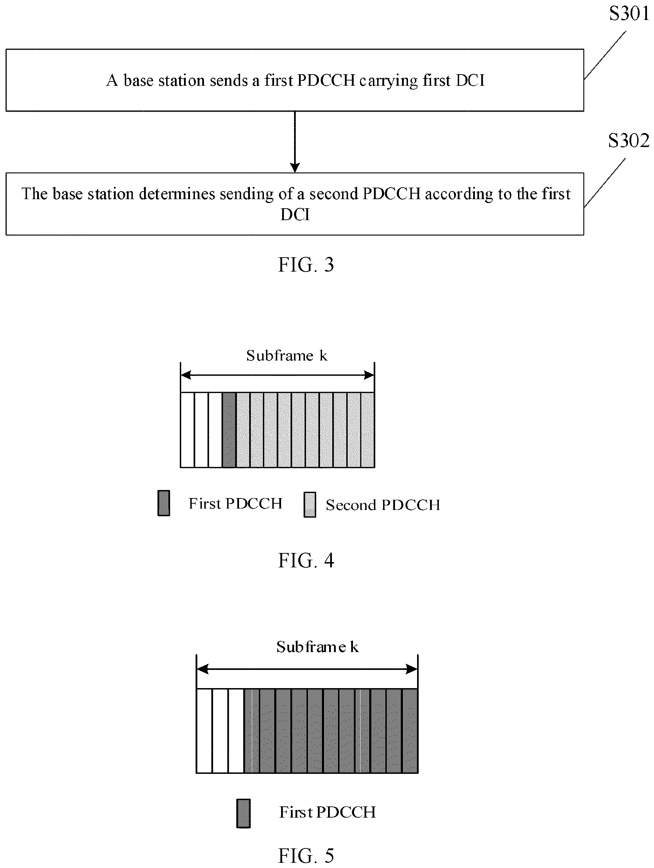

FIG. 3 is a schematic flowchart 3 of the method for transmitting a PDCCH according to the embodiment of the present invention. Referring to FIG. 3, the method includes the steps described below.

In S301, a base station sends the first PDCCH that carries the first DCI.

The first DCI includes one or more of the following information: the first indication, transmission information of the second PDCCH, and a transmission mode of the second PDCCH.

In S302, the base station determines sending of the second PDCCH according to the first DCI.

In the embodiment of the present invention, the first indication takes a first value or a second value; when the first indication takes the first value, the first indication indicates that the terminal detects the second PDCCH; and when the first indication takes the second value, the first indication indicates that the terminal does not detect the second PDCCH.

In the embodiment of the present invention, S302 may include that: when the first indication takes the first value, the base station sends the second PDCCH.

In the embodiment of the present invention, the first DCI includes the first indication of at least one terminal.

In the embodiment of the present invention, when the first DCI includes the first indication of one terminal, the first PDCCH includes one or more of the following: the OFDM symbol in which the first PDCCH is sent is the third OFDM symbol and/or the fourth OFDM symbol in a subframe; the starting position of the search space corresponding to the first PDCCH is fixed or is pre-agreed by the base station and the terminal; the number of blind detections corresponding to the first PDCCH is less than the number of blind detections corresponding to the second PDCCH; and the RNTI corresponding to the first PDCCH is the first RNTI.

In the embodiment of the present invention, when the first DCI includes the first indication of one terminal and the first indication is represented by one or more remaining states of a control domain in the first DCI, the first PDCCH includes one or more of the following: the OFDM symbol in which the first PDCCH is sent starts from the m1-th OFDM symbol to the last OFDM symbol in the subframe, where the value of m1 is indicated through higher-layer signaling; and the RNTI corresponding to the first PDCCH is the second RNTI.

In the embodiment of the present invention, when the first DCI includes the first indication of multiple terminals, the first PDCCH includes one or more of the following: the OFDM symbol in which the first PDCCH is sent starts from the m2-th OFDM symbol to the last OFDM symbol in the subframe, where the value of m2 is indicated through higher-layer signaling; and the RNTI corresponding to the first PDCCH is the third RNTI.

In the embodiment of the present invention, the transmission information of the second PDCCH includes one or more of the following information: the number of repetitions corresponding to the second PDCCH, an indication of a starting subframe of the search space corresponding to the second PDCCH, the aggregation level corresponding to the second PDCCH, and the candidate set corresponding to the second PDCCH.

In the embodiment of the present invention, the S302 may include that: when the first DCI includes the transmission information of the second PDCCH, the base station sends the second PDCCH.

In the embodiment of the present invention, when the first DCI includes the transmission information of the second PDCCH, the first PDCCH includes one or more of the following: an OFDM symbol in which the first PDCCH is sent is the third OFDM symbol and/or the fourth OFDM symbol in the subframe; the number of blind detections corresponding to the first PDCCH is smaller than the number of blind detections corresponding to the second PDCCH; and the RNTI corresponding to the first PDCCH is the first RNTI.

In the embodiment of the present invention, when the first DCI includes the first information of the multiple terminals and the transmission information of the second PDCCH, and the first indication indicates detection of the second PDCCH, the first PDCCH includes one or more of the following: the OFDM symbol in which the first PDCCH is sent starts from the m3-th OFDM symbol to the last OFDM symbol in the subframe, where the value of m3 is indicated through higher-layer signaling; and the RNTI corresponding to the first PDCCH is the fourth RNTI.

In the embodiment of the present invention, the transmission mode of the second PDCCH includes the first transmission mode and the second transmission mode; the first transmission parameter and/or the second transmission parameter are configured through RRC signaling or SIB signaling.

In the embodiment of the present invention, S302 may include that: when the transmission mode of the second PDCCH is the first transmission mode, the base station sends the second PDCCH according to the first transmission parameter corresponding to the first transmission mode; and when the transmission mode of the second PDCCH is the second transmission mode, the base station sends the second PDCCH according to the second transmission parameter corresponding to the second transmission mode.

In the embodiment of the present invention, when the first DCI includes the transmission mode of the second PDCCH, the first PDCCH includes one or more of the following: an OFDM symbol in which the first PDCCH is sent is the third OFDM symbol and/or the fourth OFDM symbol in the subframe; the RNTI corresponding to the first PDCCH is the fifth RNTI; and the number of blind detections corresponding to the first PDCCH is smaller than the number of blind detections corresponding to the second PDCCH.

In the embodiment of the present invention, when the first mode of the higher-layer signaling is enabled, the base station sends the second PDCCH to the terminal after the base station sends the first PDCCH, otherwise, the base station sends the second PDCCH directly; or when the first mode is indicated through the higher-layer signaling, the base station sends the second PDCCH to the terminal after the base station sends the first PDCCH, and when the second mode is indicated through the higher-layer signaling, the base station sends the second PDCCH directly; or at t1 millisecond in a period of t milliseconds, the base station sends the second PDCCH to the terminal after the base station sends the first PDCCH, and at other moments in the period of t milliseconds, the base station sends the second PDCCH directly. Here, the base station directly sending the second PDCCH refers to that the base station does not send the second PDCCH dedicatedly to the terminal.

The preset period is a period pre-agreed by the base station and the terminal, or a period indicated through the higher-layer signaling.

### Embodiment 4

Based on the foregoing embodiments, in practical applications, the method for transmitting a PDCCH described in the above one or more embodiments is described by taking an MTC system as an example.

FIG. 4 is a schematic diagram of a downlink subframe according to the embodiment of the present invention, and referring to FIG. 4, it is assumed that a subframe includes 14 OFDM symbols, a base station sends the first PDCCH on the fourth symbol of a subframe k, the second PDCCH is an MPDCCH/NPDCCH, and a fixed aggregation level or an aggregation level agreed by the base station and the terminal may be used when the first PDCCH is sent; and/or the fixed number of repetitions or the number of repetitions agreed by the base station and the terminal is used; and/or a fixed candidate set or a candidate set agreed by the base station and the terminal is used. Then, the RNTI corresponding to the first PDCCH is the first RNTI, such as a cell RNTI (C-RNTI), and the RNTI corresponding to the second PDCCH is also the first RNTI, that is, the C-RNTI; and the first DCI includes the first indication for indicating whether to detect the second PDCCH.

In the present embodiment, the first indication is 1 bit, that is, when the first value is 1, the detection of the second PDCCH is indicated, and when the second value is 0, the non-detection of the second PDCCH is indicated. Then, the base station sends the first PDCCH carrying the above first DCI and/or the second PDCCH.

Then, the terminal performs blind detection on the first PDCCH according to the aggregation level to detect the corresponding first PDCCH. If the obtained value of the first indication in the first DCI is 1, the terminal performs blind detection on the second PDCCH. If the obtained value of the first indication in the first DCI is 0, the terminal does not perform blind detection on the second PDCCH.

Alternatively, the terminal performs blind detection on the first PDCCH according to the number of repetitions to detect the corresponding first PDCCH. If the obtained value of the first indication in the first DCI is 1, the terminal performs blind detection on the second PDCCH. If the obtained value of the first indication in the first DCI is 0, the terminal does not perform blind detection on the second PDCCH.

Alternatively, the terminal performs blind detection on the first PDCCH according to the candidate set to detect the corresponding first PDCCH. If the obtained value of the first indication in the first DCI is 1, the terminal performs blind detection on the second PDCCH. If the obtained value of the first indication in the first DCI is 0, the terminal does not perform blind detection on the second PDCCH. Here, the number of candidate sets corresponding to the second PDCCH is limited, and no additional number of blind detections is added.

When the terminal performs blind detection on the second PDCCH, a Cyclic Redundancy Check (CRC) may be descrambled using the C-RNTI.

In the present embodiment, the terminal only needs to detect the first PDCCH, and determines whether to detect the second PDCCH according to the first indication carried in the first PDCCH. Thus, the terminal performs blind detection on the PDCCH only when the terminal detects the corresponding first indication, thereby reducing the number of blind detections and reducing the power consumption of the terminal.

### Embodiment 5

Based on the foregoing embodiments, in practical applications, the method for transmitting a PDCCH described in the above one or more embodiments is described by taking an MTC system as an example.

FIG. 5 is a schematic diagram 2 of a downlink subframe according to the embodiment of the present invention, and referring to FIG. 5, it is assumed that a subframe includes 14 OFDM symbols, the first PDCCH is sent from the m1-th OFDM symbol to the last OFDM symbol in a subframe k, and m1 is configured to be 4 through the higher-layer signaling, and the subframe k is obtained from a period and/or offset configured through higher-layer signaling. The corresponding RNTI when the first PDCCH is sent is a second RNTI different from the first RNTI, and the RNTI corresponding to the second PDCCH is still the first RNTI.

In the present embodiment, the first indication is formed by representation of one or more remaining states of a control domain, where a predefined remaining state 1 represents detecting the second PDCCH, and a predefined remaining state 2 indicates not detecting the second PDCCH.

For example, when the last 5 bits of a resource allocation control domain in the first DCI are 11110, the second PDCCH is detected, and when the last 5 bits of the resource allocation control domain are 11111, the second PDCCH is not detected.

Then, the base station sends the first PDCCH carrying the first DCI and/or the second PDCCH. Then, the terminal configured with the second RNTI blindly detects the first PDCCH according to the configured period and/or offset. If the first PDCCH is detected and the last 5 bits of the resource allocation control domain are 11110, the terminal blindly detects the second PDCCH after the subframe k; and if the first PDCCH is detected and the last 5 bits of the resource allocation control domain are 11111, the terminal does not blindly detect the second PDCCH after the subframe k until the first PDCCH is detected again.

In the embodiment of the present invention, the terminal only needs to detect the first PDCCH, and determines whether to detect the second PDCCH according to the first indication carried in the first PDCCH. Thus, the terminal performs blind detection on the PDCCH only when the terminal detects the corresponding first indication, thereby reducing the number of blind detections and reducing the power consumption of the terminal.

### Embodiment 6

Based on the foregoing embodiments, in practical applications, the method for transmitting a PDCCH described in the above one or more embodiments is described by taking an MTC system as an example.

Referring to FIG. 5, the base station sends the first PDCCH from the m2-th symbol of a subframe k, it is assumed that a subframe includes 14 OFDM symbols, the subframe k is obtained from a period and/or offset configured through higher-layer signaling, and m2 is configured to be 4 through the higher-layer signaling. The corresponding RNTI when the first PDCCH is sent is the third RNTI and the RNTI corresponding to the second PDCCH is also the C-RNTI.

In the present embodiment, the first indications of multiple terminals are carried in the first DCI, and the first indication corresponding to each terminal is 1 bit. When a value of the first indication is 1, the detection of the second PDCCH is indicated, and when a value of the second indication is 0, the non-detection of the second PDCCH is indicated.

Then, the base station sends the first PDCCH carrying the above first DCI and/or the second PDCCH.

Then, the terminal configured with the third RNTI blindly detects the first PDCCH on the subframe k according to the configured period and/or offset. If the first PDCCH is detected and the value of the first indication corresponding to the terminal is 1, the terminal blindly detects the second PDCCH after the subframe k, and the C-RNTI is used for descrambling during detection. If the first PDCCH is detected and the value of the first indication corresponding to the terminal is 0, the terminal does not blindly detect the second PDCCH after the subframe k until the first PDCCH is detected again.

### Embodiment 7

Based on the foregoing embodiments, in practical applications, the method for transmitting a PDCCH described in the above one or more embodiments is described by taking an MTC system as an example.

Referring to FIG. 4, it is assumed that a subframe includes 14 OFDM symbols, a base station sends the first PDCCH on the fourth symbol of a subframe k, and when the first PDCCH is sent, a fixed aggregation level or an aggregation level agreed by the base station and a terminal may be used, and/or the fixed number of repetitions or the number of repetitions agreed by the base station and the terminal may be used, and/or a fixed candidate set or a candidate set agreed by the base station and the terminal may be used. Then, the RNTI corresponding to the first PDCCH is the first RNTI, such as a C-RNTI, and the RNTI corresponding to the second PDCCH is also the first RNTI, that is, the C-RNTI.

In the present embodiment, the first DCI includes the transmission information of the second PDCCH.

Then, the base station sends the first PDCCH and/or the second PDCCH carrying the above first DCI.

Then, the terminal performs blind detection on the first PDCCH according to the fixed aggregation level or the aggregation level agreed by the base station and the terminal to detect the corresponding first PDCCH, and then performs blind detection on the second PDCCH according to the transmission information of the second PDCCH included in the first DCI.

Alternatively, the terminal performs blind detection on the first PDCCH according to the fixed number of repetitions or the number of repetitions agreed by the base station and the terminal to detect the corresponding first PDCCH, and then performs blind detection on the second PDCCH according to the transmission information of the second PDCCH included in the first DCI.

Alternatively, the terminal performs blind detection on the first PDCCH according to the fixed candidate set or the candidate set agreed by the base station and the terminal to detect the corresponding first PDCCH, and then performs blind detection on the second PDCCH according to the transmission information of the second PDCCH included in the first DCI.

In the above process, when the terminal blindly detects the second PDCCH, descrambling is performed by using the C-RNTI.

In the present embodiment, the terminal performs blind detection on the second PDCCH according to the transmission information of the second PDCCH included in the first DCI. It is assumed that the transmission information of the second PDCCH includes 2 bits corresponding to the number of repetitions of the second PDCCH, and then the terminal performs blind detection on the second PDCCH with the number R3 of repetitions. Of course, the terminal may also perform blind detection on the second PDCCH according to the number of repetitions indicated in Table 1, as shown in Table 1 below.

**Table 1**

| Transmission information of the second PDCCH | The number of repetitions corresponding to the second PDCCH |
|---|---|
| 00 | R1 |
| 01 | R2 |
| 10 | R3 |
| 11 | R4 |

In practical applications, other cases may exist in the Table 1, which are not specifically limited in the embodiment of the present invention.

### Embodiment 8

Based on the foregoing embodiments, in practical applications, the method for transmitting a PDCCH described in the above one or more embodiments is described by taking an MTC system as an example.

Referring to FIG. 5, it is assumed that a subframe includes 14 OFDM symbols, the first PDCCH is sent from the m3-th symbol of a subframe k, the subframe k is obtained from a period and/or offset configured through higher-layer signaling, and m3 is configured to be 4 through the higher-layer signaling; and when the base station sends the first PDCCH, the corresponding RNTI is the fourth RNTI, and the RNTI corresponding to the second PDCCH is the C-RNTI.

In the present embodiment, the first DCI includes the first indications of multiple terminals and the transmission information of the second PDCCH. The first indication is 1 bit. When a value of the first indication is 1, the detection of the second PDCCH is indicated, and when the value of the first indication is 0, the non-detection of the second PDCCH is indicated.

Then, the base station sends the first PDCCH carrying the first DCI and/or the second PDCCH.

Then, the terminal configured with the fourth RNTI blindly detects the first PDCCH on the subframe k according to the configured period and/or offset. When the first PDCCH is detected and the value of the first indication corresponding to the terminal is 1, the terminal blindly detects the second PDCCH after the subframe k, and the RNTI corresponding to the second PDCCH is C-RNTI. When the first PDCCH is detected and the value of the first indication corresponding to the terminal is 0, the terminal does not blindly detect the second PDCCH after the subframe k until the first PDCCH is detected again.

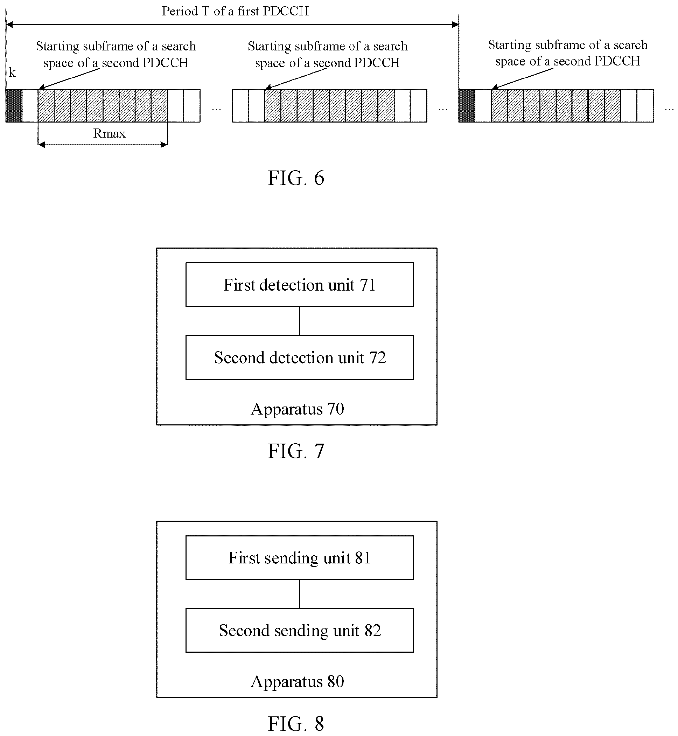

In the present embodiment, the terminal performs blind detection on the second PDCCH according to the transmission information of the second PDCCH included in the first DCI. It is assumed that the transmission information of the second PDCCH is the starting position of the search space of the second PDCCH. Referring to FIG. 6, two second PDCCH search spaces exist within the preset period T, and then the correspondence between the transmission information of the second PDCCH and the starting position of the search space of the second PDCCH may be as shown in Table 2 or Table 3 below.

**Table 2**

| Transmission information of the second PDCCH | Starting position of the search space corresponding to the second PDCCH |
|---|---|
| 0 | Starting position #1 of the search space corresponding to the second PDCCH |
| 1 | Starting position #2 of the search space corresponding to the second PDCCH |

**Table 3**

| Transmission information of the second PDCCH | Starting position of the search space corresponding to the second PDCCH |
|---|---|
| 0 | Starting from a subframe k |
| 1 | Starting from a subframe k+T/2 |

### Embodiment 9

Based on the foregoing embodiments, in practical applications, the method for transmitting a PDCCH described in the above one or more embodiments is described by taking an MTC system as an example.

Referring to FIG. 4, a base station sends the first PDCCH on the fourth symbol of a subframe k, and it is assumed that a subframe includes 14 OFDM symbols, where the corresponding RNTI when the first PDCCH is sent is the fifth RNTI and the RNTI corresponding to the second PDCCH is also the C-RNTI. The first DCI includes 1-bit transmission mode of the second PDCCH. The correspondence between the transmission mode of the second PDCCH and the transmission parameter may be as shown in Table 4 or Table 5 below and, of course, may also be represented by using one or more remaining states of a control domain.

**Table 4**

| Transmission mode of the second PDCCH | Transmission parameter |
|---|---|
| First transmission mode | A detection period T of the search space being T1 |
| Second transmission mode | A detection period T of the search space being T2 |

**Table 5**

| Transmission mode of the second PDCCH | Transmission parameter |
|---|---|
| First transmission mode | T=Rmax×G1 |
| Second transmission mode | T=Rmax×G2 |

Rmax is the maximum number of repetitions of the PDCCH and G is an offset value. The values of T 1 and T2 or G1 and G2 are configured through RRC signaling and/or SIB signaling.

In practical applications, the transmission mode of the second PDCCH may be indicated by a 1-bit mode indication, for example, when the mode indication takes 1, the transmission mode of the second PDCCH is the first transmission mode, and when the mode indication takes 0, the transmission mode of the second PDCCH is the second transmission mode 0; or when the mode indication takes 0, the transmission mode of the second PDCCH is the first transmission mode, and when the mode indication takes 1, the transmission mode of the second PDCCH is the second transmission mode 0. Of course, the transmission mode of the second PDCCH may also be indicated by other forms, which is not specifically limited in the embodiment of the present invention.

In the present embodiment, the terminal performs blind detection on the second PDCCH according to the transmission mode of the second PDCCH included in the first DCI. It is assumed that the transmission mode of the second PDCCH is the first transmission mode, and then the terminal starts to detect the second PDCCH from the starting subframe of the next search space or from the next period according to the detection period of the search space being T1. If the transmission mode of the second PDCCH is the second transmission mode, the terminal starts to detect the second PDCCH from the starting subframe of the next search space or from the next period according to the detection period of the search space being T2. Here, the magnitude of the period is preset or configured through higher-layer signaling.

### Embodiment 10

Based on the foregoing embodiments, in practical applications, a terminal may further determine, according to an indication of a transmission mode carried in DCI, a transmission parameter required for blindly detecting a PDCCH in a preset period or in a search space corresponding to the PDCCH, and determine transmission of data according to scheduling information carried in the DCI.

The transmission mode of the PDCCH includes the first transmission mode and the second transmission mode; and the first transmission parameter corresponding to the first transmission mode and/or the second transmission parameter corresponding to the second transmission mode are configured through RRC signaling or SIB signaling.

In the embodiment of the present invention, when the transmission mode of the PDCCH is indicated as the first transmission mode, the terminal blindly detects the PDCCH in the preset period or in the search space corresponding to the PDCCH according to the first transmission parameter corresponding to the first transmission mode.

In the embodiment of the present invention, when the transmission mode of the PDCCH is indicated as the second transmission mode, the terminal blindly detects the PDCCH in the preset period or in the search space corresponding to the PDCCH according to the second transmission parameter corresponding to the second transmission mode.

In the embodiment of the present invention, the terminal performs blind detection on the PDCCH according to the transmission mode of the PDCCH included in the DCI. As shown in Table 4, it is assumed that the transmission mode of the second PDCCH is the first transmission mode, and then the terminal starts to detect the PDCCH from the starting subframe of the next search space or from the next period according to the detection period of the search space being T1.If the transmission mode of the second PDCCH is the second transmission mode, the terminal starts to detect the PDCCH from the starting subframe of the next search space or from the next period according to the detection period of the search space being T2. Here, the magnitude of the period is preset or configured through higher-layer signaling.

### Embodiment 11

Based on the foregoing embodiments, in practical applications, the base station sends a PDCCH carrying DCI. The DCI includes an indication of a transmission mode of the PDCCH, and the base station determines, according to the indication of a transmission mode carried in DCI, a transmission parameter required for transmitting a PDCCH in a preset period or in a search space corresponding to the PDCCH.

The transmission mode of the PDCCH includes the first transmission mode and the second transmission mode; and the first transmission parameter corresponding to the first transmission mode and/or the second transmission parameter corresponding to the second transmission mode are configured through RRC signaling or SIB signaling.

In the embodiment of the present invention, when the transmission mode of the PDCCH is indicated as the first transmission mode, the base station sends the PDCCH in the preset period or in the search space corresponding to the PDCCH according to the first transmission parameter corresponding to the first transmission mode.

In the embodiment of the present invention, when the transmission mode of the PDCCH is indicated as the second transmission mode, the base station sends the PDCCH in the preset period or in the search space corresponding to the PDCCH according to the second transmission parameter corresponding to the second transmission mode.

It is to be noted that the transmission methods in one or more of the above embodiments are exemplified by the MTC system, and are also applicable to the NB-IOT system and the NR system, and of course, are also applicable to other communication systems, which are not specifically limited in the embodiments of the present invention.

### Embodiment 12

Based on the foregoing embodiments, the present embodiment provides an apparatus for transmitting a PDCCH. The apparatus is applied to the terminal in one or more of the above embodiments.

FIG. 7 is a schematic diagram 1 of the apparatus for transmitting a PDCCH according to the embodiment of the present invention. Referring to FIG. 7, an apparatus 70 includes: a first detection unit 71, which is configured to detect the PDCCH to obtain first DCI carried on the first PDCCH, where the first DCI includes one or more of the following information: the first indication, transmission information of the second PDCCH, and a transmission mode of the second PDCCH; a second detection unit 72, which is configured to determine detection of the second PDCCH according to the first DCI.

In the embodiment of the present invention, the first indication take the first value or the second value; when the first indication takes the first value, the first indication indicates that the terminal detects the second PDCCH; and when the first indication takes the second value, the first indication indicates that the terminal does not detect the second PDCCH. Correspondingly, the second detection unit is configured to blindly detect the second PDCCH in a preset period or in a search space corresponding to the second PDCCH.

In the embodiment of the present invention, the transmission information of the second PDCCH includes one or more of the following information: the number of repetitions corresponding to the second PDCCH, an indication of a starting subframe of the search space corresponding to the second PDCCH, the aggregation level corresponding to the second PDCCH, and the candidate set corresponding to the second PDCCH. Correspondingly, the second detection unit is configured to: when the first DCI includes the transmission information of the second PDCCH, blindly detect the second PDCCH in the preset period or in the search space corresponding to the second PDCCH according to the transmission information of the second PDCCH.

In the embodiment of the present invention, the transmission mode of the second PDCCH includes the first transmission mode and the second transmission mode; at least one of the first transmission parameter corresponding to the first transmission mode or the second transmission parameter corresponding to the second transmission mode is configured through RRC signaling or SIB signaling. Correspondingly, the second detection unit is configured to: when the transmission mode of the second PDCCH is the first transmission mode, blindly detect the second PDCCH in the preset period or in the search space corresponding to the second PDCCH according to the first transmission parameter corresponding to the first transmission mode; and is further configured to: when the transmission mode of the second PDCCH is the second transmission mode, blindly detect the second PDCCH in the preset period or in the search space corresponding to the second PDCCH according to the second transmission parameter corresponding to the second transmission mode.

In the embodiment of the present invention, the functions of the first detection unit and the second detection unit are implemented by the first controller in the terminal. In an embodiment, the terminal further includes: a first transceiver configured to receive the first PDCCH.

It is to be noted here that: above apparatus embodiment has a similar description to the above method, and has the same beneficial effects as the method embodiment. Therefore, repetition will not be made. Technical details not disclosed in the apparatus embodiment of the present invention may be understood by those skilled in the art with reference to the description of the method embodiment of the present invention. For the sake of brevity, no further description is provided herein.

### Embodiment 13

Based on the foregoing embodiments, the present embodiment provides an apparatus for transmitting a PDCCH. The apparatus is applied to the base station in one or more of the above embodiments.

FIG. 8 is a schematic diagram 2 of the apparatus for transmitting a PDCCH according to the embodiment of the present invention. Referring to FIG. 8, the apparatus 80 includes: a first sending unit 81 configured to send the first PDCCH carrying first DCI via the base station, where the first DCI includes one or more of the following information: the first indication, transmission information of the second PDCCH, and a transmission mode of the second PDCCH; and a second sending unit 82 configured to determine sending of the second PDCCH according to the first DCI via the base station.

In the embodiment of the present invention, the first indication takes a first value or a second value; when the first indication takes the first value, the first indication indicates that the terminal detects the second PDCCH; and when the first indication takes the second value, the first indication indicates that the terminal does not detect the second PDCCH. Correspondingly, a second sending unit is configured to send the second PDCCH when the first indication takes the first value.

In the embodiment of the present invention, the transmission information of the second PDCCH includes one or more of the following information: the number of repetitions corresponding to the second PDCCH, an indication of a starting subframe of the search space corresponding to the second PDCCH, the aggregation level corresponding to the second PDCCH, and the candidate set corresponding to the second PDCCH. Correspondingly, a second sending unit is configured to send the second PDCCH when the first DCI includes the transmission information of the second PDCCH.

In the embodiment of the present invention, the transmission mode of the second PDCCH includes a first transmission mode and a second transmission mode; and at least one of the first transmission parameter or the second transmission parameter is configured through RRC signaling or SIB signaling. Correspondingly, the second sending unit is configured to: when the transmission mode of the second PDCCH is the first transmission mode, send the second PDCCH according to the first transmission parameter corresponding to the first transmission mode; and is further configured to: when the transmission mode of the second PDCCH is the second transmission mode, send the second PDCCH according to the second transmission parameter corresponding to the second transmission mode.

In the embodiment of the present invention, the function of the first sending unit is implemented by the second transceiver in the terminal; and the function of the second sending unit is implemented by a second controller in the terminal. In an embodiment, the second transceiver is further configured to send the second PDCCH when the second controller determines to send the second PDCCH.

It is to be noted here that: the apparatus embodiment has similar description to the method, and has the same beneficial effects as the method embodiment. Therefore, repetition will not be made. Technical details not disclosed in the apparatus embodiment of the present invention may be understood by those skilled in the art with reference to the description of the method embodiment of the present invention. For the sake of brevity, no further description is provided herein.

Correspondingly, the embodiment of the present invention provides a computer storage medium, which is configured to store computer executable instructions for executing the method for transmitting a PDCCH described in one or more of the above embodiments.

It should be understood that "one embodiment" or "an embodiment" mentioned throughout the specification refers to that a particular feature, structure or characteristic related to the embodiments is included in at least one embodiment of the present invention. Therefore, the appearance of the phrase "in one embodiment" or "in an embodiment" in various places throughout the specification is not necessarily referring to the same embodiment. In addition, these particular features, structures or characteristics may be combined in one or more embodiments in any suitable manner. It should be understood that in various embodiments of the present invention, the serial numbers of the above processes do not mean the execution order and the execution order of the above processes should be determined according to their functions and internal logics, which should not limit the implementation processes of the present invention in any improper way. The serial numbers of the embodiments described above of the present invention are merely for ease of description and do not indicate superiority and inferiority of the embodiments.

It is to be noted that as used herein, the term "comprising", "including" or any other variant thereof is intended to encompass a non-exclusive inclusion so that a process, method, article or apparatus that includes a series of elements not only includes the expressly listed elements but also includes other elements that are not expressly listed or are inherent to such a process, method, article or apparatus. In the absence of more restrictions, the elements defined by the statement "including a ..." do not exclude the presence of additional identical elements in the process, method, article or apparatus that includes the elements.

It should be understood that the devices and the methods disclosed in the embodiments of the present application may be implemented in other ways. The device embodiments described above are merely illustrative. For example, the unit division is merely a logical function division, and, in practice, the unit division may be implemented in other ways. For example, multiple units or components may be combined or may be integrated into another system, or some features may be omitted or not executed. In addition, coupling, direct coupling or communication connections between the presented or discussed components may be indirect coupling or communication connections, via interfaces, between devices or units, and may be electrical, mechanical or in other forms.

The units described above as separate components may or may not be physically separated. Components presented as units may or may not be physical units, that is, may be located in one place or may be distributed over multiple network units. Part or all of these units may be selected according to practical requirements to achieve objects of the solutions in the embodiments of the present invention.

Moreover, various function units in the embodiments of the present invention may all be integrated in one processing unit, or each unit may be used as a separate unit, or two or more units may be integrated into one unit. The integrated function unit may be implemented by hardware or may be implemented by hardware plus a software function unit.

It may be understood by those skilled in the art that all or part of the steps in the method embodiments described above may be implemented by hardware related to program instructions, these programs may be stored in a computer-readable storage medium, and, when executed, these programs execute steps including the method embodiments described above; and the preceding storage medium includes various media capable of storing program codes, such as a removable storage device, a read-only memory (ROM), a magnetic disk or an optical disk.

Alternatively, the above-mentioned integrated unit of the present invention may also be stored in the computer-readable storage medium if implemented in the form of a software function module and sold or used as an independent product. Based on this understanding, the technical solutions provided by the embodiments of the present disclosure substantially, or the part contributing to the existing art, may be embodied in the form of a software product. The computer software product is stored in a storage medium and includes several instructions for enabling a computer apparatus (which may be a personal computer, a server, a network apparatus, etc.) to execute all or part of the methods provided by the embodiments of the present invention. The foregoing storage medium includes various media capable of storing program codes, such as a removable storage device, a ROM, a magnetic disk or an optical disk.

The above are only specific embodiments of the present invention and are not intended to limit the present invention. It is easy for those skilled in the art to conceive modifications or substitutions within the technical scope of the present invention. These modifications or substitutions are within the scope of the present invention, as long as they fall under the scope of the appended claims. Therefore, the protection scope of the present invention is subject to the scope of the appended claims.

### INDUSTRIAL APPLICABILITY

In the embodiments of the present invention, the terminal detects the first PDCCH to obtain first DCI carried on the first PDCCH, where the first DCI includes one or more of the following information: the first indication, the transmission information of the second PDCCH, and the transmission mode of the second PDCCH; and the terminal determines the detection of the second PDCCH according to the first DCI. Therefore, the number of detections of the second PDCCH and the number of blind detections when the second PDCCH is detected are reduced, and the terminal can obtain downlink information with lower power consumption.

## Claims

1. A method for detecting a Physical Downlink Control Channel, PDCCH, comprising:
detecting (S201), by a terminal, a first PDCCH to obtain first Downlink Control Information, DCI, carried on the first PDCCH, wherein the first DCI comprises one of:
a first indication,
a first indication and transmission information of a second PDCCH,
a first indication and a transmission mode of the second PDCCH,
a first indication, transmission information of a second PDCCH and a transmission mode of the second PDCCH; and
determining (S202), by the terminal, detection of the second PDCCH according to the first DCI; **characterized in that**
the first indication takes a first value or a second value; in a case that the first indication takes the first value, the first indication indicates that the terminal detects the second PDCCH; and in a case that the first indication takes the second value, the first indication indicates that the terminal does not detect the second PDCCH;
wherein in the case that the first indication takes the first value, determining, by the terminal, detection of the second PDCCH according to the first DCI comprises:
blindly detecting, by the terminal, the second PDCCH in a preset period or in a search space corresponding to the second PDCCH; and
wherein in a case that the first DCI comprises first indications of a plurality of terminals and a first indication corresponding to each terminal of the plurality of terminals is 1 bit, a radio network temporary identifier, RNTI, corresponding to the first PDCCH is a third RNTI; and wherein an RNTI corresponding to the second PDCCH is a first RNTI.

2. The method of claim 1, wherein the first DCI comprises the first indication of at least one terminal;
wherein in a case that the first DCI comprises the first indication of one terminal, the first PDCCH comprises one or more of following cases:
an Orthogonal Frequency Division Multiplexing, OFDM, symbol in which the first PDCCH is sent is a third and/or a fourth OFDM symbol in a subframe;
a starting position of a search space corresponding to the first PDCCH is fixed or pre-agreed by a base station and the terminal;
a number of blind detections corresponding to the first PDCCH is less than a number of blind detections corresponding to the second PDCCH;
or
in a case that the first DCI comprises the first indication of one terminal and the first indication is represented by one or more remaining states of a control domain in the first DCI, the first PDCCH comprises one or more of following cases:
an OFDM symbol in which the first PDCCH is sent starts from an m1-th OFDM symbol to a last OFDM symbol in a subframe, wherein a value of m1 is indicated through higher-layer signaling; and
an RNTI corresponding to the first PDCCH is a second RNTI; or
wherein in a case that the first DCI comprises first indications of a plurality of terminals, the first PDCCH comprises:
an OFDM symbol in which the first PDCCH is sent starts from an m2-th OFDM symbol to a last OFDM symbol in a subframe, wherein a value of m2 is indicated through higher-layer signaling.

3. The method of claim 1, wherein the transmission information of the second PDCCH comprises one or more of following information: a number of repetitions corresponding to the second PDCCH, an indication of a starting subframe of a search space corresponding to the second PDCCH, an aggregation level corresponding to the second PDCCH, and a candidate set corresponding to the second PDCCH;
wherein in a case that the first DCI comprises the transmission information of the second PDCCH, the first PDCCH comprises one or more of following cases:
an OFDM symbol in which the first PDCCH is sent is a third and/or a fourth OFDM symbol in a subframe;
a number of blind detections corresponding to the first PDCCH is less than a number of blind detections corresponding to the second PDCCH;
or
wherein in a case that the first DCI comprises first information of a plurality of terminals and the transmission information of the second PDCCH, the first PDCCH comprises one or more of following cases:
an OFDM symbol in which the first PDCCH is sent starts from an m3-th OFDM symbol to a last OFDM symbol in a subframe, wherein a value of m3 is indicated through higher-layer signaling; and
an RNTI corresponding to the first PDCCH is a fourth RNTI.

4. The method of claim 1 or 3, wherein the determining, by the terminal, the detection of the second PDCCH according to the first DCI comprises:
in a case that the first DCI comprises the transmission information of the second PDCCH, blindly detecting, by the terminal and according to the transmission information of the second PDCCH, the second PDCCH in a preset period or in the search space corresponding to the second PDCCH.

5. The method of claim 1, wherein the transmission mode of the second PDCCH comprises a first transmission mode and a second transmission mode; and at least one of a first transmission parameter corresponding to the first transmission mode or a second transmission parameter corresponding to the second transmission mode is configured through Radio Resource Control, RRC, signaling or System Information Block, SIB, signaling.

6. The method of claim 1 or 5, wherein the determining, by the terminal, the detection of the second PDCCH according to the first DCI comprises:
in a case that the transmission mode of the second PDCCH is the first transmission mode, blindly detecting, by the terminal and according to the first transmission parameter corresponding to the first transmission mode, the second PDCCH in a preset period or in a search space corresponding to the second PDCCH; and
in a case that the transmission mode of the second PDCCH is the second transmission mode, blindly detecting, by the terminal and according to the second transmission parameter corresponding to the second transmission mode, the second PDCCH in the preset period or in the search space corresponding to the second PDCCH.

7. The method of claim 5, wherein in a case that the first DCI comprises the transmission mode of the second PDCCH, the first PDCCH comprises one or more of following cases:
an OFDM symbol in which the first PDCCH is sent is a third and/or a fourth OFDM symbol in a subframe, or is from an m4-th OFDM symbol to a last OFDM symbol in the subframe, wherein a value of m4 is indicated through higher-layer signaling;
an RNTI corresponding to the first PDCCH is a fifth RNTI; and
a number of blind detections corresponding to the first PDCCH is less than a number of blind detections corresponding to the second PDCCH.

8. A method for transmitting a physical downlink control channel, PDCCH, comprising:
sending (S301), by a base station, a first PDCCH carrying first downlink control information, DCI; and
determining (S302), by the base station, sending of a second PDCCH according to the first DCI;
wherein the first DCI comprises one of:
a first indication,
a first indication and transmission information of the second PDCCH,
a first indication and a transmission mode of the second PDCCH, or
a first indication, transmission information of the second PDCCH and a transmission mode of the second PDCCH; **characterized in that**
the first indication takes a first value or a second value; in a case that the first indication takes the first value, the first indication indicates that a terminal detects the second PDCCH; and in a case that the first indication takes the second value, the first indication indicates that the terminal does not detect the second PDCCH;
wherein the determining, by the base station, the sending of the second PDCCH according to the first DCI comprises:
in the case that the first indication takes the first value, sending, by the base station, the second PDCCH; and
wherein in a case that the first DCI comprises first indications of a plurality of terminals and a first indication corresponding to each terminal of the plurality of terminals is 1 bit, a radio network temporary identifier, RNTI, corresponding to the first PDCCH is a third RNTI; and wherein an RNTI corresponding to the second PDCCH is a first RNTI.

9. The method of claim 8, wherein the first DCI comprises the first indication of at least one terminal;
wherein in a case that the first DCI comprises the first indication of one terminal, the first PDCCH comprises one or more of following cases:
an Orthogonal Frequency Division Multiplexing, OFDM, symbol in which the first PDCCH is sent is a third and/or a fourth OFDM symbol in a subframe;
a starting position of a search space corresponding to the first PDCCH is fixed or pre-agreed by the base station and a terminal;
a number of blind detections corresponding to the first PDCCH is less than a number of blind detections corresponding to the second PDCCH;
; or
wherein in a case that the first DCI comprises the first indication of one terminal and the first indication is represented by one or more remaining states of a control domain in the first DCI, the first PDCCH comprises one or more of following cases:
an OFDM symbol in which the first PDCCH is sent starts from an m1-th OFDM symbol to a last OFDM symbol in a subframe, wherein a value of m1 is indicated through higher-layer signaling; and
an RNTI corresponding to the first PDCCH is a second RNTI; or
wherein in a case that the first DCI comprises first indications of a plurality of terminals, the first PDCCH comprises one or more of following cases:
an OFDM symbol in which the first PDCCH is sent starts from an m2-th OFDM symbol to a last OFDM symbol in a subframe, wherein a value of m2 is indicated through higher-layer signaling; and
an RNTI corresponding to the first PDCCH is a third RNTI.

10. The method of claim 8, wherein the transmission information of the second PDCCH comprises one or more of following information: a number of repetitions corresponding to the second PDCCH, an indication of a starting subframe of a search space corresponding to the second PDCCH, an aggregation level corresponding to the second PDCCH, and a candidate set corresponding to the second PDCCH;
wherein in a case that the first DCI comprises the transmission information of the second PDCCH, the first PDCCH comprises one or more of following cases:
an OFDM symbol in which the first PDCCH is sent is a third and/or a fourth OFDM symbol in a subframe;
a number of blind detections corresponding to the first PDCCH is less than a number of blind detections corresponding to the second PDCCH;
or
wherein in a case that the first DCI comprises first information of a plurality of terminals and the transmission information of the second PDCCH and the first indication indicates detection of the second PDCCH, the first PDCCH comprises one or more of following cases:
an OFDM symbol in which the first PDCCH is sent starts from an m3-th OFDM symbol to a last OFDM symbol in a subframe, wherein a value of m3 is indicated through higher-layer signaling; and
an RNTI corresponding to the first PDCCH is a fourth RNTI.

11. The method of claim 8 or 10, wherein the determining, by the base station, the sending of the second PDCCH according to the first DCI comprises:
in a case that the first DCI comprises the transmission information of the second PDCCH, sending, by the base station, the second PDCCH.

12. The method of claim 8, wherein the transmission mode of the second PDCCH comprises a first transmission mode and a second transmission mode; and at least one of a first transmission parameter or a second transmission parameter is configured through Radio Resource Control, RRC, signaling or System Information Block, SIB, signaling.

13. The method of claim 12, wherein the determining, by the base station, the sending of the second PDCCH according to the first DCI comprises:
in a case that the transmission mode of the second PDCCH is the first transmission mode, sending, by the base station, the second PDCCH according to the first transmission parameter corresponding to the first transmission mode; and
in a case that the transmission mode of the second PDCCH is the second transmission mode, sending, by the base station, the second PDCCH according to the second transmission parameter corresponding to the second transmission mode.

14. The method of claim 12, wherein in a case that the first DCI comprises the transmission mode of the second PDCCH, the first PDCCH comprises one or more of following cases:
an OFDM symbol in which the first PDCCH is sent is a third and/or a fourth OFDM symbol in a subframe, or is from an m4-th OFDM symbol to a last OFDM symbol in the subframe, wherein a value of m4 is indicated through higher-layer signaling;
an RNTI corresponding to the first PDCCH is a fifth RNTI; and
a number of blind detections corresponding to the first PDCCH is less than a number of blind detections corresponding to the second PDCCH.

15. An apparatus for detecting a Physical Downlink Control Channel, PDCCH, comprising:
a first detection unit (71), which is configured to detect a first PDCCH to obtain first Downlink Control Information, DCI, carried on the first PDCCH, wherein the first DCI comprises one of:
a first indication,
a first indication and transmission information of a second PDCCH,
a first indication and a transmission mode of the second PDCCH, or
a first indication, transmission information of a second PDCCH and a transmission mode of the second PDCCH; and
a second detection unit (72), which is configured to determine detection of the second PDCCH according to the first DCI; **characterized in that** the first indication takes a first value or a second value; in a case that the first indication takes the first value, the first indication indicates that a terminal detects the second PDCCH; in a case that the first indication takes the second value, the first indication indicates that the terminal does not detect the second PDCCH;
accordingly, the second detection unit (72) is configured to blindly detect the second PDCCH in a preset period or in a search space corresponding to the second PDCCH;
wherein in a case that the first DCI comprises first indications of a plurality of terminals and a first indication corresponding to each terminal of the plurality of terminals is 1 bit, a radio network temporary identifier, RNTI, corresponding to the first PDCCH is a third RNTI; and wherein an RNTI corresponding to the second PDCCH is a first RNTI.

16. An apparatus for transmitting a Physical Downlink Control Channel, PDCCH, comprising:
a first sending unit (81), which is configured to send a first PDCCH carrying first Downlink Control Information, DCI, wherein the first DCI comprises one of :
a first indication,
a first indication and transmission information of a second PDCCH,
a first indication and a transmission mode of the second PDCCH, or
a first indication, transmission information of a second PDCCH and a transmission mode of the second PDCCH; and
a second sending unit (82), which is configured to determine, according to the first DCI, sending of the second PDCCH; **characterized in that**
the first indication takes a first value or a second value; in a case that the first indication takes the first value, the first indication indicates that a terminal detects the second PDCCH; in a case that the first indication takes the second value, the first indication indicates that the terminal does not detect the second PDCCH; and
accordingly, the second sending unit (82) is configured to: in a case that the first indication takes the first value, send the second PDCCH;
wherein in a case that the first DCI comprises first indications of a plurality of terminals and a first indication corresponding to each terminal of the plurality of terminals is 1 bit, a radio network temporary identifier, RNTI, corresponding to the first PDCCH is a third RNTI; and wherein an RNTI corresponding to the second PDCCH is a first RNTI.

## Patentansprüche

1. Verfahren zum Erfassen eines physikalischen Downlink-Steuerkanals, PDCCH, das aufweist:
Erfassen (S201) durch ein Endgerät eines ersten PDCCH, um erste Downlink-Steuerinformationen, DCI, zu erhalten, die auf dem ersten PDCCH übertragen werden, wobei die ersten DCI eines aufweisen von:
eine erste Indikation,
eine erste Indikation und Übertragungsinformationen eines zweiten PDCCH,
eine erste Indikation und einen Übertragungsmodus des zweiten PDCCH,
eine erste Indikation, Übertragungsinformationen eines zweiten PDCCH und einen Übertragungsmodus des zweiten PDCCH; und
Bestimmen (S202) durch das Endgerät einer Erfassung des zweiten PDCCH gemäß den ersten DCI; **dadurch gekennzeichnet, dass**
die erste Indikation einen ersten Wert oder einen zweiten Wert annimmt; in einem Fall, in dem die erste Indikation den ersten Wert annimmt, die erste Indikation angibt, dass das Endgerät den zweiten PDCCH erfasst; und in einem Fall, in dem die erste Indikation den zweiten Wert annimmt, die erste Indikation angibt, dass das Endgerät den zweiten PDCCH nicht erfasst;
wobei in dem Fall, dass die erste Indikation den ersten Wert annimmt, die Bestimmung der Erfassung des zweiten PDCCH durch das Endgerät gemäß den ersten DCI aufweist: blindes Erfassen des zweiten PDCCH durch das Endgerät in einem voreingestellten Zeitraum oder in einem Suchraum, der dem zweiten PDCCH entspricht; und
wobei in einem Fall, in dem die ersten DCI erste Indikationen von mehreren Endgeräten aufweisen und eine erste Indikation, die jedem Endgerät der mehreren Endgeräte entspricht, 1 Bit ist, eine temporäre Funknetzkennung, RNTI, die dem ersten PDCCH entspricht, eine dritte RNTI ist; und wobei eine RNTI, die dem zweiten PDCCH entspricht, eine erste RNTI ist.

2. Verfahren nach Anspruch 1, wobei die ersten DCI die erste Indikation von mindestens einem Endgerät aufweisen;
wobei in einem Fall, in dem die ersten DCI die erste Indikation von einem Endgerät aufweisen, der erste PDCCH einen oder mehrere der folgenden Fälle aufweist:
ein orthogonales Frequenzmultiplex, OFDM, Symbol, in dem der erste PDCCH gesendet wird, ist ein drittes und/oder ein viertes OFDM-Symbol in einem Subrahmen;
eine Startposition eines Suchraums, der dem ersten PDCCH entspricht, ist festgelegt oder von einer Basisstation und dem Endgerät im Voraus vereinbart;
eine Anzahl von Blind-Erfassungen, die dem ersten PDCCH entsprechen, ist geringer als eine Anzahl von Blind-Erfassungen, die dem zweiten PDCCH entsprechen;
oder
in einem Fall, in dem die ersten DCI die erste Indikation eines Endgeräts aufweisen und die erste Indikation durch einen oder mehrere verbleibende Zustände eines Steuerbereichs in den ersten DCI dargestellt wird, weist der erste PDCCH einen oder mehrere der folgenden Fälle auf:
ein OFDM-Symbol, in dem der erste PDCCH gesendet wird, beginnt bei einem m1-ten OFDM-Symbol bis zu einem letzten OFDM-Symbol in einem Subrahmen, wobei ein Wert von m1 durch eine Signalisierung einer höheren Schicht angezeigt wird; und
eine RNTI, die dem ersten PDCCH entspricht, eine zweite RNTI ist; oder
wobei in einem Fall, in dem die ersten DCI erste Indikationen von mehreren Endgeräten aufweisen, der erste PDCCH aufweist:
ein OFDM-Symbol, in dem der erste PDCCH gesendet wird, beginnt bei einem m2-ten OFDM-Symbol bis zu einem letzten OFDM-Symbol in einem Subrahmen, wobei ein Wert von m2 durch eine Signalisierung einer höheren Schicht angezeigt wird.

3. Verfahren nach Anspruch 1, wobei die Übertragungsinformationen des zweiten PDCCH eine oder mehrere der folgenden Informationen aufweisen: eine Anzahl von Wiederholungen, die dem zweiten PDCCH entsprechen, einen Indikation eines Start-Subrahmens eines Suchraums, der dem zweiten PDCCH entspricht, einen Aggregationsgrad, der dem zweiten PDCCH entspricht, und einen Kandidatensatz, der dem zweiten PDCCH entspricht;
wobei in einem Fall, in dem die ersten DCI die Übertragungsinformationen des zweiten PDCCH aufweisen, der erste PDCCH einen oder mehrere der folgenden Fälle aufweist:
ein OFDM-Symbol, in dem der erste PDCCH gesendet wird, ist ein drittes und/oder ein viertes OFDM-Symbol in einem Subrahmen;
eine Anzahl von Blind-Erfassungen, die dem ersten PDCCH entsprechen, ist geringer als eine Anzahl von Blind-Erfassungen, die dem zweiten PDCCH entsprechen;
oder
wobei in einem Fall, in dem die ersten DCI erste Informationen von mehreren Endgeräten und die Übertragungsinformationen des zweiten PDCCH aufweisen, der erste PDCCH einen oder mehrere der folgenden Fälle aufweist:
ein OFDM-Symbol, in dem der erste PDCCH gesendet wird, beginnt bei einem m3-ten OFDM-Symbol bis zu einem letzten OFDM-Symbol in einem Subrahmen, wobei ein Wert von m3 durch eine Signalisierung einer höheren Schicht angezeigt wird; und
eine RNTI, die dem ersten PDCCH entspricht, eine vierte RNTI ist.

4. Verfahren nach Anspruch 1 oder 3, wobei das Bestimmen durch das Endgerät der Erfassung des zweiten PDCCH gemäß den ersten DCI aufweist:
in einem Fall, in dem die ersten DCI die Übertragungsinformationen des zweiten PDCCH aufweisen, blindes Erfassen des zweiten PDCCH durch das Endgerät und gemäß Übertragungsinformationen des zweiten PDCCH in einem voreingestellten Zeitraum oder in dem Suchraum, der dem zweiten PDCCH entspricht.

5. Verfahren nach Anspruch 1, wobei der Übertragungsmodus des zweiten PDCCH einen ersten Übertragungsmodus und einen zweiten Übertragungsmodus aufweist; und wobei mindestens einer eines ersten Übertragungsparameters, der dem ersten Übertragungsmodus entspricht, oder eines zweiten Übertragungsparameters, der dem zweiten Übertragungsmodus entspricht, durch Funkressourcensteuerung, RRC, Signalisierung oder Systeminformationsblock, SIB, Signalisierung konfiguriert wird.

6. Verfahren nach Anspruch 1 oder 5, wobei das Bestimmen durch das Endgerät der Erfassung des zweiten PDCCH gemäß den ersten DCI aufweist:
in einem Fall, in dem der Übertragungsmodus des zweiten PDCCH der erste Übertragungsmodus ist, blindes Erfassen durch das Endgerät und gemäß dem ersten Übertragungsparameter, der dem ersten Übertragungsmodus entspricht, des zweiten PDCCH in einem voreingestellten Zeitraum oder in einem Suchraum, der dem zweiten PDCCH entspricht; und
in einem Fall, in dem der Übertragungsmodus des zweiten PDCCH der zweite Übertragungsmodus ist, blindes Erfassen durch das Endgerät und gemäß dem zweiten Übertragungsparameter, der dem zweiten Übertragungsmodus entspricht, des zweiten PDCCH in dem voreingestellten Zeitraum oder in dem Suchraum, der dem zweiten PDCCH entspricht.

7. Verfahren nach Anspruch 5, wobei in einem Fall, in dem die ersten DCI den Übertragungsmodus des zweiten PDCCH aufweisen, der erste PDCCH einen oder mehrere der folgenden Fälle aufweist:
ein OFDM-Symbol, in dem der erste PDCCH gesendet wird, ist ein drittes und/oder ein viertes OFDM-Symbol in einem Subrahmen oder befindet sich von einem m4-ten OFDM-Symbol bei zu einem letzten OFDM-Symbol in dem Subrahmen, wobei ein Wert von m4 durch eine Signalisierung einer höheren Schicht angezeigt wird;
eine RNTI, die dem ersten PDCCH entspricht, ist eine fünfte RNTI; und
eine Anzahl von Blind-Erfassungen, die dem ersten PDCCH entsprechen, geringer ist als eine Anzahl von Blind-Erfassungen, die dem zweiten PDCCH entsprechen.

8. Verfahren zum Übertragen eines physikalischen Downlink-Steuerkanals, PDCCH, das aufweist:
Senden (S301) durch eine Basisstation eines ersten PDCCH, der erste Downlink-Steuerinformationen, DCI, befördert; und
Bestimmen (S302) durch die Basisstation des Sendens eines zweiten PDCCH gemäß den ersten DCI;
wobei die ersten DCI eines aufweisen von:
eine erste Indikation,
eine erste Indikation und Übertragungsinformationen des zweiten PDCCH,
eine erste Indikation und einen Übertragungsmodus des zweiten PDCCH oder
eine erste Indikation, Übertragungsinformationen des zweiten PDCCH und einen Übertragungsmodus des zweiten PDCCH; **dadurch gekennzeichnet, dass**
die erste Indikation einen ersten Wert oder einen zweiten Wert annimmt; in einem Fall, in dem die erste Indikation den ersten Wert annimmt, die erste Indikation angibt, dass ein Endgerät den zweiten PDCCH erfasst; und in einem Fall, in dem die erste Indikation den zweiten Wert annimmt, die erste Indikation angibt, dass das Endgerät den zweiten PDCCH nicht erfasst;
wobei das Bestimmen durch die Basisstation des Sendens des zweiten PDCCH gemäß den ersten DCI aufweist:
in dem Fall, dass die erste Indikation den ersten Wert annimmt, Senden des zweiten PDCCH durch die Basisstation; und
wobei in einem Fall, in dem die ersten DCI erste Indikationen von mehreren Endgeräten aufweisen und eine erste Indikation, die jedem Endgerät der mehreren Endgeräte entspricht, 1 Bit ist, eine temporäre Funknetzkennung, RNTI, die dem ersten PDCCH entspricht, eine dritte RNTI ist; und wobei eine RNTI, die dem zweiten PDCCH entspricht, eine erste RNTI ist.

9. Verfahren nach Anspruch 8, wobei die ersten DCI die erste Indikation von mindestens einem Endgerät aufweisen;
wobei in einem Fall, in dem die ersten DCI die erste Indikation von einem Endgerät aufweisen, der erste PDCCH einen oder mehrere der folgenden Fälle aufweist:
ein orthogonales Frequenzmultiplex, OFDM, Symbol, in dem der erste PDCCH gesendet wird, ist ein drittes und/oder ein viertes OFDM-Symbol in einem Subrahmen;
eine Startposition eines Suchraums, der dem ersten PDCCH entspricht, ist durch die Basisstation und ein Endgerät festgelegt oder im Voraus vereinbart;
eine Anzahl von Blind-Erfassungen, die dem ersten PDCCH entsprechen, geringer ist als eine Anzahl von Blind-Erfassungen, die dem zweiten PDCCH entsprechen;
oder
wobei in einem Fall, in dem die ersten DCI die erste Indikation eines Endgeräts aufweisen und die erste Indikation durch einen oder mehrere verbleibende Zustände eines Steuerbereichs in den ersten DCI dargestellt wird, der erste PDCCH einen oder mehrere der folgenden Fälle aufweist:
ein OFDM-Symbol, in dem der erste PDCCH gesendet wird, beginnt bei einem m1-ten OFDM-Symbol bis zu einem letzten OFDM-Symbol in einem Subrahmen, wobei ein Wert von m1 durch eine Signalisierung einer höheren Schichten angezeigt wird; und eine RNTI, die dem ersten PDCCH entspricht, ist eine zweite RNTI; oder
wobei in einem Fall, in dem die ersten DCI erste Indikationen von mehreren Endgeräten aufweisen, der erste PDCCH einen oder mehrere der folgenden Fälle aufweist:
ein OFDM-Symbol, in dem der erste PDCCH gesendet wird, beginnt bei einem m2-ten OFDM-Symbol bis zu einem letzten OFDM-Symbol in einem Subrahmen, wobei ein Wert von m2 durch eine Signalisierung einer höheren Schicht angezeigt wird; und
eine RNTI, die dem ersten PDCCH entspricht, eine dritte RNTI ist.

10. Verfahren nach Anspruch 8, wobei die Übertragungsinformationen des zweiten PDCCH eine oder mehrere der folgenden Informationen aufweisen: eine Anzahl von Wiederholungen, die dem zweiten PDCCH entsprechen, eine Indikation eines Start-Subrahmens eines Suchraums, der dem zweiten PDCCH entspricht, eine Aggregationsebene, die dem zweiten PDCCH entspricht, und einen Kandidatensatz, der dem zweiten PDCCH entspricht;
wobei in einem Fall, in dem die ersten DCI die Übertragungsinformationen des zweiten PDCCH aufweisen, der erste PDCCH einen oder mehrere der folgenden Fälle aufweist:
ein OFDM-Symbol, in dem der erste PDCCH gesendet wird, ist ein drittes und/oder ein viertes OFDM-Symbol in einem Subrahmen;
eine Anzahl von Blind-Erfassungen, die dem ersten PDCCH entsprechen, ist geringer als eine Anzahl von Blind-Erfassungen, die dem zweiten PDCCH entsprechen;
oder
wobei in einem Fall, in dem die ersten DCI erste Informationen von mehreren Endgeräten und die Übertragungsinformationen des zweiten PDCCH aufweisen und die erste Indikation eine Erfassung des zweiten PDCCH angibt, der erste PDCCH einen oder mehrere der folgenden Fälle aufweist:
ein OFDM-Symbol, in dem der erste PDCCH gesendet wird, beginnt bei einem m3-ten OFDM-Symbol bis zu einem letzten OFDM-Symbol in einem Subrahmen, wobei ein Wert von m3 durch eine Signalisierung einer höheren Schicht angezeigt wird; und eine RNTI, die dem ersten PDCCH entspricht, ist eine vierte RNTI.

11. Verfahren nach Anspruch 8 oder 10, wobei das Bestimmen durch die Basisstation des Sendens des zweiten PDCCH gemäß den ersten DCI aufweist:
in einem Fall, in dem das erste DCI die Übertragungsinformationen des zweiten PDCCH aufweisen, Senden des zweiten PDCCH durch die Basisstation.

12. Verfahren nach Anspruch 8, wobei der Übertragungsmodus des zweiten PDCCH einen ersten Übertragungsmodus und einen zweiten Übertragungsmodus aufweist; und mindestens einer eines ersten Übertragungsparameters oder eines zweiten Übertragungsparameters durch Funkressourcensteuerung, RRC, Signalisierung oder Systeminformationsblock, SIB, Signalisierung konfiguriert wird.

13. Verfahren nach Anspruch 12, wobei das Bestimmen durch die Basisstation des Sendens des zweiten PDCCH gemäß den ersten DCI aufweist:
in einem Fall, in dem der Übertragungsmodus des zweiten PDCCH der erste Übertragungsmodus ist, Senden durch die Basisstation des zweiten PDCCH gemäß dem ersten Übertragungsparameter, der dem ersten Übertragungsmodus entspricht; und
in einem Fall, in dem der Übertragungsmodus des zweiten PDCCH der zweite Übertragungsmodus ist, Senden durch die Basisstation des zweiten PDCCH gemäß dem zweiten Übertragungsparameter, der dem zweiten Übertragungsmodus entspricht.

14. Verfahren nach Anspruch 12, wobei in einem Fall, in dem die ersten DCI den Übertragungsmodus des zweiten PDCCH aufweisen, der erste PDCCH einen oder mehrere der folgenden Fälle aufweist:
ein OFDM-Symbol, in dem der erste PDCCH gesendet wird, ist ein drittes und/oder ein viertes OFDM-Symbol in einem Subrahmen oder befindet sich von einem m4-ten OFDM-Symbol bis zu einem letzten OFDM-Symbol in dem Subrahmen, wobei ein Wert von m4 durch eine Signalisierung einer höheren Schicht angezeigt wird;
eine RNTI, die dem ersten PDCCH entspricht, ist eine fünfte RNTI; und
eine Anzahl von Blind-Erfassungen, die dem ersten PDCCH entsprechen, ist geringer als eine Anzahl von Blind-Erfassungen, die dem zweiten PDCCH entsprechen.

15. Vorrichtung zum Erfassen eines physikalischen Downlink-Steuerkanals, PDCCH, die aufweist:
eine erste Erfassungseinheit (71), die konfiguriert ist, um einen ersten PDCCH zu erfassen, um erste Downlink-Steuerinformationen, DCI, zu erhalten, die auf dem ersten PDCCH befördert werden, wobei die ersten DCI eines aufweisen von:
eine erste Indikation,
eine erste Indikation und Übertragungsinformationen eines zweiten PDCCH,
eine erste Indikation und einen Übertragungsmodus des zweiten PDCCH oder
eine erste Indikation, Übertragungsinformationen eines zweiten PDCCH und einen Übertragungsmodus des zweiten PDCCH; und
eine zweite Erfassungseinheit (72), die konfiguriert ist, um die Erfassung des zweiten PDCCH gemäß den ersten DCI zu bestimmen; **dadurch gekennzeichnet, dass**
die erste Indikation einen ersten Wert oder einen zweiten Wert annimmt; in einem Fall, in dem die erste Indikation den ersten Wert annimmt, die erste Indikation angibt, dass ein Endgerät den zweiten PDCCH erfasst; in einem Fall, in dem die erste Indikation den zweiten Wert annimmt, die erste Indikation angibt, dass das Endgerät den zweiten PDCCH nicht erfasst;
dementsprechend die zweite Erfassungseinheit (72) konfiguriert ist, den zweiten PDCCH in einem voreingestellten Zeitraum oder in einem Suchraum blind zu erfassen, der dem zweiten PDCCH entspricht;
wobei in einem Fall, in dem die ersten DCI erste Indikationen von mehreren Endgeräten aufweisen und eine erste Indikation, die jedem Endgerät der mehreren Endgeräte entspricht, 1 Bit ist, eine temporäre Funknetzkennung, RNTI, die dem ersten PDCCH entspricht, eine dritte RNTI ist; und wobei eine RNTI, die dem zweiten PDCCH entspricht, eine erste RNTI ist.

16. Vorrichtung zum Übertragen eines physikalischen Downlink-Steuerkanals, PDCCH, die aufweist:
eine erste Sendeeinheit (81), die konfiguriert ist, um einen ersten PDCCH zu senden, der erste Downlink-Steuerinformationen, DCI, trägt, wobei die ersten DCI eines aufweisen von:
eine erste Indikation,
eine erste Indikation und Übertragungsinformationen eines zweiten PDCCH,
eine erste Indikation und einen Übertragungsmodus des zweiten PDCCH oder
eine erste Indikation, Übertragungsinformationen eines zweiten PDCCH und einen Übertragungsmodus des zweiten PDCCH; und
eine zweite Sendeeinheit (82), die konfiguriert ist, um gemäß den ersten DCI das Senden des zweiten PDCCH zu bestimmen; **dadurch gekennzeichnet, dass**
die erste Indikation einen ersten Wert oder einen zweiten Wert annimmt; in einem Fall, dass die erste Indikation den ersten Wert annimmt, die erste Indikation angibt, dass ein Endgerät den zweiten PDCCH erfasst; in einem Fall, dass die erste Indikation den zweiten Wert annimmt, die erste Indikation angibt, dass das Endgerät den zweiten PDCCH nicht erfasst; und
dementsprechend die zweite Sendeeinheit (82) konfiguriert ist, um in einem Fall, dass die erste Indikation den ersten Wert annimmt, den zweiten PDCCH zu senden;
wobei in einem Fall, in dem die ersten DCI erste Indikationen von mehreren Endgeräten aufweisen und eine erste Indikation, die jedem Endgerät der mehreren Endgeräte entspricht, 1 Bit ist, eine temporäre Funknetzkennung, RNTI, die dem ersten PDCCH entspricht, eine dritte RNTI ist; und wobei eine RNTI, die dem zweiten PDCCH entspricht, eine erste RNTI ist.

## Revendications

1. Procédé de détection d'un canal de commande physique descendant, PDCCH, comprenant :
la détection (S201), par un terminal, d'un premier PDCCH afin d'obtenir des premières informations de commande de liaison descendante, DCI, transportées sur le premier PDCCH, les premières DCI comprenant l'un des éléments suivants :
une première indication,
une première indication et des informations de transmission d'un deuxième PDCCH,
une première indication et un mode de transmission du deuxième PDCCH,
une première indication, des informations de transmission d'un deuxième PDCCH et un mode de transmission du deuxième PDCCH ; et
la détermination (S202), par le terminal, d'une détection du deuxième PDCCH en fonction des premières DCI; **caractérisé en ce que**
la première indication prend une première valeur ou une deuxième valeur ; dans le cas où la première indication prend la première valeur, la première indication indique que le terminal détecte le deuxième PDCCH ; et dans le cas où la première indication prend la deuxième valeur, la première indication indique que le terminal ne détecte pas le deuxième PDCCH ;
où, dans le cas où la première indication prend la première valeur, la détermination, par le terminal, de la détection du deuxième PDCCH en fonction des premières DCI comprend :
la détection à l'aveugle, par le terminal, du deuxième PDCCH dans une période prédéfinie ou dans un espace de recherche correspondant au deuxième PDCCH ; et
où, dans le cas où les premières DCI comprennent des premières indications d'une pluralité de terminaux et où une première indication correspondant à chaque terminal de la pluralité de terminaux est de 1 bit, un identifiant temporaire de réseau radio, RNTI, correspondant au premier PDCCH est un troisième RNTI ; et où un RNTI correspondant au deuxième PDCCH est un premier RNTI.

2. Procédé selon la revendication 1, où les premières DCI comprennent la première indication d'au moins un terminal ;
où, dans le cas où les premières DCI comprennent la première indication d'un terminal, le premier PDCCH comprend un ou plusieurs des cas suivants :
un symbole de multiplexage en fréquence orthogonal, OFDM, dans lequel le premier PDCCH est envoyé est un troisième et/ou un quatrième symbole OFDM dans une sous-trame ;
une position initiale d'un espace de recherche correspondant au premier PDCCH est fixée ou convenue à l'avance par une station de base et le terminal ;
le nombre de détections à l'aveugle correspondant au premier PDCCH est inférieur au nombre de détections à l'aveugle correspondant au deuxième PDCCH ;
ou
où, dans le cas où les premières DCI comprennent la première indication d'un terminal et où la première indication est représentée par un ou plusieurs états restants d'un domaine de commande dans les premières DCI, le premier PDCCH comprend un ou plusieurs des cas suivants :
un symbole OFDM dans lequel le premier PDCCH est envoyé va d'un m1-ième symbole OFDM à un dernier symbole OFDM dans une sous-trame, la valeur de m1 étant indiquée par une signalisation de couche supérieure ; et
un RNTI correspondant au premier PDCCH est un deuxième RNTI ; ou
où, dans le cas où les premières DCI comprennent des premières indications d'une pluralité de terminaux, le premier PDCCH comprend :
un symbole OFDM dans lequel le premier PDCCH est envoyé va d'un m2-ième symbole OFDM à un dernier symbole OFDM dans une sous-trame, la valeur de m2 étant indiquée par une signalisation de couche supérieure.

3. Procédé selon la revendication 1, où les informations de transmission du deuxième PDCCH comprennent une ou plusieurs des informations suivantes : un nombre de répétitions correspondant au deuxième PDCCH, une indication d'une sous-trame initiale d'un espace de recherche correspondant au deuxième PDCCH, un niveau d'agrégation correspondant au deuxième PDCCH, et un ensemble de candidats correspondant au deuxième PDCCH ;
où, dans le cas où les premières DCI comprennent les informations de transmission du deuxième PDCCH, le premier PDCCH comprend un ou plusieurs des cas suivants :
un symbole OFDM dans lequel le premier PDCCH est envoyé est un troisième et/ou un quatrième symbole OFDM dans une sous-trame ;
le nombre de détections à l'aveugle correspondant au premier PDCCH est inférieur au nombre de détections à l'aveugle correspondant au deuxième PDCCH ;
ou
où, dans le cas où les premières DCI comprennent des premières informations d'une pluralité de terminaux et les informations de transmission du deuxième PDCCH, le premier PDCCH comprend un ou plusieurs des cas suivants :
un symbole OFDM dans lequel le premier PDCCH est envoyé va d'un m3-ième symbole OFDM à un dernier symbole OFDM dans une sous-trame, la valeur de m3 étant indiquée par une signalisation de couche supérieure ; et
un RNTI correspondant au premier PDCCH est un quatrième RNTI.

4. Procédé selon la revendication 1 ou la revendication 3, où la détermination, par le terminal, de la détection du deuxième PDCCH en fonction des premières DCI comprend :
dans le cas où les premières DCI comprennent les informations de transmission du deuxième PDCCH, la détection à l'aveugle, par le terminal et en fonction des informations de transmission du deuxième PDCCH, du deuxième PDCCH dans une période prédéfinie ou dans l'espace de recherche correspondant au deuxième PDCCH.

5. Procédé selon la revendication 1, où le mode de transmission du deuxième PDCCH comprend un premier mode de transmission et un deuxième mode de transmission ; et au moins un paramètre entre un premier paramètre de transmission correspondant au premier mode de transmission ou un deuxième paramètre de transmission correspondant au deuxième mode de transmission est configuré par signalisation de commande de ressources radio, RRC, ou par signalisation de bloc d'informations système, SIB.

6. Procédé selon la revendication 1 ou la revendication 5, où la détermination, par le terminal, de la détection du deuxième PDCCH en fonction des premières DCI comprend :
dans le cas où le mode de transmission du deuxième PDCCH est le premier mode de transmission, la détection à l'aveugle, par le terminal et en fonction du premier paramètre de transmission correspondant au premier mode de transmission, du deuxième PDCCH dans une période prédéfinie ou dans un espace de recherche correspondant au deuxième PDCCH ; et,
dans le cas où le mode de transmission du deuxième PDCCH est le deuxième mode de transmission, détection à l'aveugle, par le terminal et en fonction du deuxième paramètre de transmission correspondant au deuxième mode de transmission, du deuxième PDCCH dans la période prédéfinie ou dans l'espace de recherche correspondant au deuxième PDCCH.

7. Procédé selon la revendication 5, où dans le cas où les premières DCI comprennent le mode de transmission du deuxième PDCCH, le premier PDCCH comprend un ou plusieurs des cas suivants :
un symbole OFDM dans lequel le premier PDCCH est envoyé est un troisième et/ou un quatrième symbole OFDM dans une sous-trame, ou va d'un m4-ième symbole OFDM à un dernier symbole OFDM dans la sous-trame, la valeur de m4 étant indiquée par une signalisation de couche supérieure ;
un RNTI correspondant au premier PDCCH est un cinquième RNTI ; et
le nombre de détections à l'aveugle correspondant au premier PDCCH est inférieur au nombre de détections à l'aveugle correspondant au deuxième PDCCH.

8. Procédé de transmission d'un canal de commande physique descendant, PDCCH, comprenant :
l'envoi (S301), par une station de base, d'un premier PDCCH contenant des premières informations de commande de liaison descendante, DCI; et
la détermination (S302), par la station de base, de l'envoi d'un deuxième PDCCH en fonction des premières DCI ;
où les premières DCI comprennent l'un des éléments suivants :
une première indication,
une première indication et des informations de transmission du deuxième PDCCH,
une première indication et un mode de transmission du deuxième PDCCH, ou
une première indication, des informations de transmission du deuxième PDCCH et un mode de transmission du deuxième PDCCH ; **caractérisé en ce que**
la première indication prend une première valeur ou une deuxième valeur ; dans le cas où la première indication prend la première valeur, la première indication indique qu'un terminal détecte le deuxième PDCCH ; et dans le cas où la première indication prend la deuxième valeur, la première indication indique que le terminal ne détecte pas le deuxième PDCCH ;
où la détermination, par la station de base, de l'envoi du deuxième PDCCH en fonction des premières DCI comprend :
dans le cas où la première indication prend la première valeur, l'envoi, par la station de base, du deuxième PDCCH ; et
où, dans le cas où les premières DCI comprennent des premières indications d'une pluralité de terminaux et où une première indication correspondant à chaque terminal de la pluralité de terminaux est de 1 bit, un identifiant temporaire de réseau radio, RNTI, correspondant au premier PDCCH est un troisième RNTI ; et où un RNTI correspondant au deuxième PDCCH est un premier RNTI.

9. Procédé selon la revendication 8, où les premières DCI comprennent la première indication d'au moins un terminal ;
où, dans le cas où les premières DCI comprennent la première indication d'un terminal, le premier PDCCH comprend un ou plusieurs des cas suivants :
un symbole de multiplexage en fréquence orthogonal, OFDM, dans lequel le premier PDCCH est envoyé est un troisième et/ou un quatrième symbole OFDM dans une sous-trame ;
une position initiale d'un espace de recherche correspondant au premier PDCCH est fixée ou convenue à l'avance par la station de base et un terminal ;
le nombre de détections à l'aveugle correspondant au premier PDCCH est inférieur au nombre de détections à l'aveugle correspondant au deuxième PDCCH ;
ou
où, dans le cas où les premières DCI comprennent la première indication d'un terminal et que la première indication est représentée par un ou plusieurs états restants d'un domaine de commande dans les premières DCI, le premier PDCCH comprend un ou plusieurs des cas suivants :
un symbole OFDM dans lequel le premier PDCCH est envoyé va d'un m1-ième symbole OFDM à un dernier symbole OFDM dans une sous-trame, la valeur de m1 étant indiquée par une signalisation de couche supérieure ; et
un RNTI correspondant au premier PDCCH est un deuxième RNTI ; ou
où, dans le cas où les premières DCI comprennent des premières indications d'une pluralité de terminaux, le premier PDCCH comprend un ou plusieurs des cas suivants :
un symbole OFDM dans lequel le premier PDCCH est envoyé va d'un m2-ième symbole OFDM à un dernier symbole OFDM dans une sous-trame, la valeur de m2 étant indiquée par une signalisation de couche supérieure ; et
un RNTI correspondant au premier PDCCH est un troisième RNTI.

10. Procédé selon la revendication 8, où les informations de transmission du deuxième PDCCH comprennent une ou plusieurs des informations suivantes : un nombre de répétitions correspondant au deuxième PDCCH, une indication d'une sous-trame initiale d'un espace de recherche correspondant au deuxième PDCCH, un niveau d'agrégation correspondant au deuxième PDCCH, et un ensemble de candidats correspondant au deuxième PDCCH ;
dans le cas où les premières DCI comprennent les informations de transmission du deuxième PDCCH, le premier PDCCH comprend un ou plusieurs des cas suivants :
un symbole OFDM dans lequel le premier PDCCH est envoyé est un troisième et/ou un quatrième symbole OFDM dans une sous-trame ;
le nombre de détections à l'aveugle correspondant au premier PDCCH est inférieur au nombre de détections à l'aveugle correspondant au deuxième PDCCH ;
ou
où, dans le cas où les premières DCI comprennent des premières informations d'une pluralité de terminaux et les informations de transmission du deuxième PDCCH et où la première indication indique la détection du deuxième PDCCH, le premier PDCCH comprend un ou plusieurs des cas suivants :
un symbole OFDM dans lequel le premier PDCCH est envoyé va d'un m3-ième symbole OFDM à un dernier symbole OFDM dans une sous-trame, la valeur de m3 étant indiquée par une signalisation de couche supérieure ; et
un RNTI correspondant au premier PDCCH est un quatrième RNTI.

11. Procédé selon la revendication 8 ou la revendication 10, où la détermination, par la station de base, de l'envoi du deuxième PDCCH en fonction des premières DCI comprend :
dans le cas où les premières DCI comprennent les informations de transmission du deuxième PDCCH, l'envoi, par la station de base, du deuxième PDCCH.

12. Procédé selon la revendication 8, où le mode de transmission du deuxième PDCCH comprend un premier mode de transmission et un deuxième mode de transmission ; et au moins un paramètre entre un premier paramètre de transmission ou un deuxième paramètre de transmission est configuré par signalisation de commande des ressources radio, RRC, ou signalisation de bloc d'informations système, SIB.

13. Procédé selon la revendication 12, où la détermination, par la station de base, de l'envoi du deuxième PDCCH en fonction des premières DCI comprend :
dans le cas où le mode de transmission du deuxième PDCCH est le premier mode de transmission, l'envoi, par la station de base, du deuxième PDCCH en fonction du premier paramètre de transmission correspondant au premier mode de transmission ; et,
dans le cas où le mode de transmission du deuxième PDCCH est le deuxième mode de transmission, la station de base envoie le deuxième PDCCH en fonction du deuxième paramètre de transmission correspondant au deuxième mode de transmission.

14. Procédé selon la revendication 12, où, dans le cas où les premières DCI comprennent le mode de transmission du deuxième PDCCH, le premier PDCCH comprend un ou plusieurs des cas suivants :
un symbole OFDM dans lequel le premier PDCCH est envoyé est un troisième et/ou un quatrième symbole OFDM dans une sous-trame, ou va d'un m4-ième symbole OFDM à un dernier symbole OFDM dans la sous-trame, la valeur de m4 étant indiquée par une signalisation de couche supérieure ;
un RNTI correspondant au premier PDCCH est un cinquième RNTI ; et
le nombre de détections à l'aveugle correspondant au premier PDCCH est inférieur au nombre de détections à l'aveugle correspondant au deuxième PDCCH.

15. Appareil de détection d'un canal de commande physique descendant, PDCCH, comprenant :
une première unité de détection (71), configurée pour détecter un premier PDCCH afin d'obtenir des premières informations de commande de liaison descendante, DCI,
transportées sur le premier PDCCH, les premières DCI comprenant l'un des éléments suivants :
une première indication,
une première indication et des informations de transmission d'un deuxième PDCCH,
une première indication et un mode de transmission du deuxième PDCCH, ou
une première indication, des informations de transmission d'un deuxième PDCCH et un mode de transmission du deuxième PDCCH ; et
une deuxième unité de détection (72), configurée pour déterminer la détection du deuxième PDCCH en fonction des premières DCI; **caractérisé en ce que**
la première indication prend une première valeur ou une deuxième valeur ; dans le cas où la première indication prend la première valeur, la première indication indique qu'un terminal détecte le deuxième PDCCH ; dans le cas où la première indication prend la deuxième valeur, la première indication indique que le terminal ne détecte pas le deuxième PDCCH ;
en conséquence, la deuxième unité de détection (72) est configurée pour détecter à l'aveugle le deuxième PDCCH dans une période prédéfinie ou dans un espace de recherche correspondant au deuxième PDCCH ;
où, dans le cas où les premières DCI comprennent des premières indications d'une pluralité de terminaux et où une première indication correspondant à chaque terminal de la pluralité de terminaux est de 1 bit, un identifiant temporaire de réseau radio, RNTI, correspondant au premier PDCCH est un troisième RNTI ; et où un RNTI correspondant au deuxième PDCCH est un premier RNTI.

16. Appareil de transmission d'un canal de commande physique descendant, PDCCH, comprenant :
une première unité d'émission (81), configurée pour envoyer un premier PDCCH contenant des premières informations de commande de liaison descendante, DCI, les premières DCI comprenant l'un des éléments suivants :
une première indication,
une première indication et des informations de transmission d'un deuxième PDCCH,
une première indication et un mode de transmission du deuxième PDCCH, ou
une première indication, des informations de transmission d'un deuxième PDCCH et un mode de transmission du deuxième PDCCH ; et
une deuxième unité d'émission (82), configurée pour déterminer, en fonction des premières DCI, l'envoi du deuxième PDCCH ; **caractérisé en ce que**
la première indication prend une première valeur ou une deuxième valeur ; dans le cas où la première indication prend la première valeur, la première indication indique qu'un terminal détecte le deuxième PDCCH ; dans le cas où la première indication prend la deuxième valeur, la première indication indique que le terminal ne détecte pas le deuxième PDCCH ; en conséquence, la deuxième unité d'émission (82) est configurée pour : dans le cas où la première indication prend la première valeur, envoyer le deuxième PDCCH ;
où, dans le cas où les premières DCI comprennent des premières indications d'une pluralité de terminaux et une première indication correspondant à chaque terminal de la pluralité de terminaux est de 1 bit, un identifiant temporaire de réseau radio, RNTI, correspondant au premier PDCCH est un troisième RNTI ; et où un RNTI correspondant au deuxième PDCCH est un premier RNTI.
